(19) Europäisches Patentamt / European Patent Office / Office européen des brevets

(11) EP 3 611 663 B1

(12) **EUROPEAN PATENT SPECIFICATION**

(45) Date of publication and mention of the grant of the patent:
**26.02.2025 Bulletin 2025/09**

(21) Application number: **18853742.7**

(22) Date of filing: **11.09.2018**

(51) International Patent Classification (IPC):
***G06F 16/583*** *(2019.01)*

(52) Cooperative Patent Classification (CPC):
**G06F 16/583; G06N 3/044; G06N 3/045; G06N 3/08; G06V 10/454; G06V 10/764; G06V 10/82**

(86) International application number:
**PCT/CN2018/105009**

(87) International publication number:
**WO 2019/047971 (14.03.2019 Gazette 2019/11)**

(54) **IMAGE RECOGNITION METHOD, TERMINAL AND STORAGE MEDIUM**

BILDERKENNUNGSVERFAHREN, ENDGERÄT UND SPEICHERMEDIUM

PROCÉDÉ DE RECONNAISSANCE D'IMAGE, TERMINAL ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.09.2017 CN 201710814187**

(43) Date of publication of application:
**19.02.2020 Bulletin 2020/08**

(73) Proprietor: **Tencent Technology (Shenzhen) Company Limited**
**Shenzhen, Guangdong, 518057 (CN)**

(72) Inventors:
- **JIANG, Wenhao**
  **Shenzhen**
  **Guangdong 518057 (CN)**
- **MA, Lin**
  **Shenzhen**
  **Guangdong 518057 (CN)**
- **LIU, Wei**
  **Shenzhen**
  **Guangdong 518057 (CN)**

(74) Representative: **Nederlandsch Octrooibureau**
**P.O. Box 29720**
**2502 LS The Hague (NL)**

(56) References cited:
**CN-A- 106 446 782** **CN-A- 106 845 411**
**CN-A- 107 038 221** **CN-A- 108 304 846**
**US-B1- 8 165 354**

- **ZHILIN YANG ET AL: "Review Networks for Caption Generation", 27 October 2016 (2016-10-27), XP055748543, Retrieved from the Internet <URL:https://arxiv.org/pdf/1605.07912.pdf> [retrieved on 20201109]**
- **LONG CHEN ET AL: "SCA-CNN: Spatial and Channel-wise Attention in Convolutional Networks for Image Captioning", ARXIV.ORG, CORNELL UNIVERSITY LIBRARY, 201 OLIN LIBRARY CORNELL UNIVERSITY ITHACA, NY 14853, 17 November 2016 (2016-11-17), XP080732428, DOI: 10.1109/CVPR.2017.667**
- **TING YAO ET AL: "Boosting Image Captioning with Attributes", ARXIV.ORG, CORNELL UNIVERSITY LIBRARY, 201 OLIN LIBRARY CORNELL UNIVERSITY ITHACA, NY 14853, 5 November 2016 (2016-11-05), XP080729597, DOI: 10.1109/ICCV.2017.524**
- **KELVIN XU ET AL: "Show, Attend and Tell: Neural Image Caption Generation with Visual Attention", 19 April 2016 (2016-04-19), XP055748546, Retrieved from the Internet <URL:https://arxiv.org/pdf/1502.03044.pdf> [retrieved on 20201109]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- STEVEN J RENNIE ET AL: "Self-critical Sequence Training for Image Captioning", ARXIV.ORG, CORNELL UNIVERSITY LIBRARY, 201 OLIN LIBRARY CORNELL UNIVERSITY ITHACA, NY 14853, 2 December 2016 (2016-12-02), XP080736250, DOI: 10.1109/CVPR.2017.131
- YANG ZICHAO ET AL: "Stacked Attention Networks for Image Question Answering", 2016 IEEE CONFERENCE ON COMPUTER VISION AND PATTERN RECOGNITION (CVPR), IEEE, 27 June 2016 (2016-06-27), pages 21 - 29, XP033021131, DOI: 10.1109/CVPR.2016.10

## Description

### TECHNICAL FIELD

Embodiments of this application relate to the field of machine learning, and in particular to a method for recognizing an image, a terminal and a storage medium to support blind persons in recognizing images.

### BACKGROUND

With development of science and technologies and requirements of people for convenient man-machine interactive manners, machine learning has been widely applied to the field of image recognition. For example, in scenarios such as early children education, image retrieval, and navigation for the blind, people usually expect machines to automatically recognize images, and provide a descriptive statement that can accurately describe content of the image. That is, the image is translated into a natural language, based on which the image can be comprehended or classified.

An existing system framework for recognizing an image usually includes an encoder and a decoder. Based on the system framework, a method for recognizing an image is provided in related art, which includes operations as follows. Feature extraction is performed on an image by using an encoder, to obtain a feature vector and an annotation vector set. The feature vector is obtained by performing global feature extraction on the image, and the annotation vector set is obtained by performing local feature extraction on the image. Then, initialization processing is performed on the feature vector, to obtain initial input data. The initial input data is used for indicating an initial state of the decoder, which usually includes initial hidden state information and initial memory cell state information. Next, artificially designed specific information is extracted from the image as guiding information, and the annotation vector set and the initial input data are decoded based on the guiding information by using the decoder, to obtain a descriptive statement of the image. The guiding information is used for guiding an encoding process of the encoder, to improve quality of the generated descriptive statement, so that the generated descriptive statement can more accurately describe the image and conform to semantics.

Document Zhilin Yang ET AL, "Review Networks for Caption Generation", (20161027), URL: https://arxiv.org/pdf/1605.07912.pdf, (20201109), concerns a review network which enhances existing encoder-decoder models.

Document LONG CHEN ET AL, "SCA-CNN: Spatial and Channel-wise Attention in Convolutional Networks for Image Captioning", ARXIV.ORG, CORNELL UNIVERSITY LIBRARY, 201 OLIN LIBRARY CORNELL UNIVERSITY ITHACA, NY 14853, (20161117), concerns a convolutional network dubbed SCA-CNN that incorporates spatial and channel-wise attentions in a CNN.

### SUMMARY

As claimed in the independent claims, this invention provides a method for recognizing an image according to claim 1, an apparatus according to claim 6, and a storage medium according to claim 7 are provided according to the embodiments of this application, to solve the problem in the related art of low quality of a generated descriptive statement resulting from an inaccurate descriptive statement of an image generated based on artificially designed guiding information. Further aspects of the present invention are defined in the dependent claims. The technical solutions are described as follows.

The technical solutions provided in the embodiments of this application bring about the following beneficial effects:

In the embodiments of this application, a guiding network model is added between an encoder and a decoder. After an annotation vector set is extracted from a target image, guiding information may be generated based on the annotation vector set using the guiding network model. Because the guiding network model can generate, according to an annotation vector set of an image, guiding information of the image, the guiding information generated by using the guiding network model can facilitate generation of a descriptive statement of the target image, and improvement of accuracy, thereby accurately guiding an encoding process of the target image, and improving quality of the generated descriptive statement.

### BRIEF DESCRIPTION OF DRAWINGS

To describe the technical solutions in the embodiments of this application more clearly, the following briefly describes the accompanying drawings required for describing the embodiments. Apparently, the accompanying drawings in the following description show merely some embodiments of this application, and a person of ordinary skill in the art may still derive other drawings from these accompanying drawings without creative efforts.

FIG. 1 is a schematic diagram of a logical structure of an RNN model according to an embodiment of this application.
FIG. 2 is a schematic diagram of a logical structure of an LSTM model according to an embodiment of this application.

FIG. 3 is a schematic structural diagram of a system for recognizing an image according to an embodiment of this application.

FIG. 4 is a schematic structural diagram of another system for recognizing an image according to an embodiment of this application.

FIG. 5 is a schematic structural diagram of still another system for recognizing an image according to an embodiment of this application.

FIG. 6 is a schematic structural diagram of yet another system for recognizing an image according to an embodiment of this application.

FIG. 7 is a flowchart of a method for recognizing an image according to an embodiment of this application.

FIG. 8 is a flowchart of another method for recognizing an image according to an embodiment of this application.

FIG. 9 is a schematic structural diagram of an apparatus for recognizing an image according to an embodiment of this application.

FIG. 10 is a schematic structural diagram of a generating module 303 according to an embodiment of this application.

FIG. 11 is a schematic structural diagram of another generating module 303 according to an embodiment of this application.

FIG. 12 is a schematic structural diagram of a determining module 304 according to an embodiment of this application.

FIG. 13 is a schematic structural diagram of another apparatus for recognizing an image according to an embodiment of this application.

FIG. 14 is a schematic structural diagram of another determining module 304 according to an embodiment of this application.

FIG. 15 is a schematic structural diagram of another apparatus for recognizing an image according to an embodiment of this application.

FIG. 16 is a schematic structural diagram of a terminal 400 according to an embodiment of this application.

## DETAILED DESCRIPTION

To make objectives, technical solutions, and advantages of this application clearer, the following further describes in detail implementations of this application with reference to the accompanying drawings.

Before the embodiments of this application are explained and described in detail, terms involved in the embodiments of this application are explained and described first.

Encoder

The encoder is configured to encode an image to generate a vector, and a convolutional neural network (CNN) model may be used in the encoder.

Decoder

The decoder is configured to decode the vector generated by the encoder, to translate the vector generated by the encoder into a descriptive statement of the image, and a recurrent neural network (RNN) model is used in the decoder.

Guiding information

The guiding information is obtained by processing an image, and is usually represented as a vector. The guiding information is used as a part of an input of the decoder to guide a decoding process. The guiding information inputted to the decoder can improve performance of the decoder, thereby ensuring that the decoder can generate a better descriptive statement, and improve quality of the generated descriptive statement.

CNN Model

The CNN model refers to a neural network model for image classification and recognition developed based on a conventional multi-layer neural network. The CNN model usually includes multiple convolutional layers and at least one fully connected layer, and can perform feature extraction on an image.

RNN Model

The conventional neural network has no memory function, that is, an input of the conventional neural network is independent data without context correlation. However, in actual application, the input is usually some serialized inputs with obvious context features. For example, if a next word in a descriptive statement needs to be predicted, in this case, an output of the neural network needs to rely on a previous input. That is, it is required that the neural network has a memory function. The RNN model is a neural network that has nodes directionally connected as a ring and has a memory function, and may circularly process inputted data with the internal memory function.

FIG. 1 is a schematic diagram of a logical structure of an RNN model according to an embodiment of this application. As shown on the left side of FIG. 1, the RNN model is in a three-layer structure including an input layer, a hidden layer and an output layer. The hidden layer is in a ring structure. The input layer is connected to the hidden layer, and the hidden layer is connected to the output layer.

For ease of describing the function of the RNN model, a structure of the RNN model shown on the left side of FIG. 1 is expanded according to a time sequence, to obtain a structure shown on the right side of FIG. 1. Input data received by the input layer of the RNN model is data sorted according to a time sequence, that is, the input data received by the input layer is serialized data. For ease of description, the serialized data is denoted as $x_1$, $x_2$, ..., $x_1$, ..., and $x_n$, moments respectively corresponding to the serialized data are denoted as $t_1$, $t_2$, ..., $t_1$,..., and $t_n$, output data obtained by processing $x_1$, $x_2$,...,$x_i$,..., and $x_n$ respectively is denoted as $f_1$, $f_2$, ..., $f_i$,..., and $f_n$. Steps of processing the input data by the RNN model according to a time sequence may be referred to as sequential steps, where n is the number of circularly processing the input data by the RNN model.

As shown on the right side of FIG. 1, in the expanded RNN model, input data received by the input layer at moment $t_1$ is denoted as $x_1$, and $x_1$ is transmitted to the hidden layer, and the hidden layer processes $x_1$, and transmits the processed data to the output layer, to obtain output data $f_1$ at moment $t_1$. Input data received by the input layer at moment $t_2$ is denoted as $x_2$, and $x_2$ is transmitted to the hidden layer. In this case, the hidden layer processes $x_2$ according to output data $f_1$ at moment $t_1$, and transmits the processed data to the output layer, to obtain output data $f_2$ at moment $t_2$. That is, at any moment $t_i$, in addition to input data $x_i$ transmitted by the input layer at moment $t_i$, the hidden layer further receives output data $f_{i-1}$ at moment $t_{i-1}$, and processes $x_i$ according to $f_{i-1}$, to obtain output data $f_i$ at moment $t_i$.

Long Short-term Memory (LSTM) Network Model

The LSTM network model is a special RNN model that can process and predict an important event with a relatively long interval and delay in a time sequence. The LSTM network model includes an LSTM unit. The LSTM unit is provided with an input gate, a forget gate, and an output gate. In each sequential step, input data may be processed based on the disposed input gate, forget gate, and output gate.

FIG. 2 is a schematic diagram showing a logical structure of an LSTM network model according to an embodiment of this application. As shown on the left side of FIG. 2, the LSTM network model includes an LSTM unit, and the LSTM unit is in a ring structure. In any sequential step t performed by the LSTM unit, the LSTM unit may process input data $x_t$ in sequential step t and output data $f_{t-1}$ in previous sequential step t-1, to obtain output data $f_t$ of the sequential step t.

As shown on the right side of FIG. 2, in the LSTM network model expanded according to a time sequence, after receiving input data $x_1$ of sequential step $t_1$, the LSTM unit may process $x_1$ to obtain output data $f_1$ of sequential step $t_1$, and then input $f_1$ to the LSTM unit. After receiving input data $x_2$ of sequential step $t_2$, the LSTM unit may process $f_1$ and $x_2$, to obtain output data $f_2$ of sequential step $t_2$, until output data $f_n$ of sequential step $t_n$ is obtained based on input data $x_n$ of sequential step $t_n$ and output data $f_{n-1}$ of sequential step $t_{n-1}$, where n is the number of circularly processing the input data by the LSTM network model.

Review-net

The review-net is an image recognition network based on an encoder-decoder framework, and includes a reviewer and a decoder. Both the reviewer and the decoder usually use a CNN model. The reviewer may further dig an interactive relationship between a global feature and a local feature extracted from an image by the encoder, and generate initial input data for the decoder based on the interactive relationship between the global feature and the local feature, to improve performance of the decoder.

Next, application scenarios of the embodiments of this application are described.

The invention is applied to scenarios such as a reading or chatting system for the blind. In these scenarios, images usually need to be automatically translated into a natural language.

An example not falling under the scope of the claims but helping to understand the invention is that, in order to improve a capability of young children of looking at pictures and recognizing objects, a method for recognizing an image may be used to translate an image seen by young children into a descriptive statements corresponding to the image, and then transform the descriptive statements into voice to play, so that the young children can learn content of the image content in combination with the image and the voice.

For another such example, regarding a lot of images stored in a database, a method for recognizing an image provided in the embodiments of this application may be used to translate an image into a descriptive statement corresponding to the image to accurately classify the image according to the descriptive statement of the image, or accurately retrieve the image according to the descriptive statement of the image.

According to the invention,

for an image to be recognized by a blind person, the image may be first translated into a descriptive statement corresponding to the image. The descriptive statement is transformed into voice to play, so that the blind person recognizes the image by using the heard voice, or transforms the descriptive statement into Braille for the blind person to recognize the image by reading the Braille.

For another example, in a chatting system, an image in a chatting window may be translated into a descriptive statement corresponding to the image, and the descriptive statement is displayed.

Next, a system architecture involved in the embodiments of this application is described.

FIG. 3 is a schematic structural diagram of a system for recognizing an image according to an embodiment of this application. As shown in FIG. 3, the system for recognizing an image includes an encoder 10, a first guiding network model 20 and a decoder 30.

The encoder 10 is configured to encode a to-be-recognized target image, that is, perform feature extraction on the target image, to obtain a feature vector and a first annotation vector set. The feature vector is used for indicating a global feature of the target image, and the first annotation vector set is used for indicating a local feature of the target image.

The encoder 10 may output the first annotation vector set to the decoder 30 and the first guiding network model 20. The encoder 10 may perform initialization processing on the feature vector, to obtain first initial input data, and then output the first initial input data to the decoder 30. Alternatively, the encoder 10 may output the feature vector to another model, and the another model performs initialization processing on the feature vector outputted by the target encoder 10, to obtain first initial input data, and outputs the first initial input data to the decoder 30.

The first guiding network model 20 is configured to generate first guiding information based on the first annotation vector set outputted by the encoder 10, and then output the first guiding information to the decoder 30. The first guiding network model is obtained through training by using an annotation vector set of a sample image.

The decoder 30 is configured to determine a descriptive statement of the target image based on the first guiding information, the first annotation vector set and the first initial input data.

It can be known from the foregoing, as compared with the related technology, the system for recognizing an image shown in FIG. 3 further includes a guiding network model between the encoder and the decoder. Because the guiding network model can generate, according to an annotation vector set of an image, a descriptive statement of the image, as compared with artificially designed guiding information, guiding information generated by using the guiding network model can be more suitable for a generation process of the descriptive statement of the target image and has higher accuracy, thereby accurately guiding an encoding process of the image, and improving quality of the generated descriptive statement.

FIG. 4 is a schematic structural diagram of another system for recognizing an image according to the invention.

As shown in FIG. 4, the system for recognizing an image includes an encoder 10, a first guiding network model 20, a decoder 30, and a multi-instance model 40.

The encoder 10 and the decoder 30 in FIG. 4 have the same functions as those in FIG. 3. For specific description of the encoder and the decoder in FIG. 4, reference may be made to FIG. 3, which is not described repeatedly here anymore.

The multi-instance model 40 is configured to process the to-be-recognized target image, to obtain attribute information of the target image. The attribute information is used for indicating a predicted occurrence probability of a word in the descriptive statement of the target image, and output the attribute information of the target image to the first guiding network model 20.

The first guiding network model 20 is configured to generate first guiding information based on the first annotation vector set outputted by the encoder 10 and the attribute information of the target image outputted by the multi-instance model 40.

In FIG. 4, the multi-instance model 40 is added prior to the first guiding network model 20, and the first guiding network model 20 determines the first guiding information according to the first annotation vector set and the attribute information of the target image comprehensively, thereby further improving accuracy of the generated first guiding information.

FIG. 5 is a schematic structural diagram of another system for recognizing an image according to an embodiment not falling under the scope of the claims but being helpful to understand the invention.

As shown in FIG. 5, the system for recognizing an image includes an encoder 10, a first guiding network model 20, a reviewer 50, a second guiding network model 60, and a decoder 30.

The encoder 10 in FIG. 5 has the same function as that in FIG. 3. For specific description of the encoder 10 in FIG. 5, reference may be made to FIG. 3. Details are not described herein again.

The first guiding network model 20 is configured to generate first guiding information based on the first annotation vector set inputted by the encoder 10, and output the first guiding information to the reviewer 50.

The reviewer 50 is configured to determine a second annotation vector set and second initial input data based on the first initial input data, the first annotation vector set and the first guiding information, output the second annotation vector set and the second initial input data to the decoder 30, and output the second annotation vector set to the second guiding network model 60. The second initial input data is initial input data of the decoder 30, and is used for indicating an initial state of the decoder 30 which may include initial hidden state information and initial memory cell state information.

The second guiding network model 60 is configured to generate second guiding information based on the second annotation vector set, and output the second guiding information to the decoder 30. The second guiding network model is also obtained through training by using a sample image.

The decoder 30 is configured to decode the second annotation vector set and the second initial input data based on the second guiding information, to obtain a descriptive statement of the target image.

In FIG. 5, the reviewer is added between the encoder and the decoder, and may be configured to further dig an interactive relationship between a local feature and a global feature of the target image, and the generated second annotation vector set and second initial input data can more accurately indicate the features of the target image, thereby further improving system performance of the system for recognizing an image, and improving quality of the generated descriptive statement.

FIG. 6 is a schematic structural diagram of another system for recognizing an image according to an embodiment of this application. As shown in FIG. 6, the system for recognizing an image includes an encoder 10, a first guiding network model 20, a reviewer 50, a second guiding network model 60, a decoder 30, and a multi-instance model 40.

The encoder 10, the reviewer 50, and the decoder 30 in FIG. 6 have the same functions as those in FIG. 5. For specific description of the encoder 10, the reviewer 50 and the decoder 30 in FIG. 6, reference may be made to FIG. 5. Details are not described herein again.

The multi-instance model 40 is configured to process the to-be-recognized target image, to obtain attribute information of the target image, and output the attribute information of the target image to the first guiding network model 20 and the second guiding network model 60.

The first guiding network model 20 is configured to generate first guiding information based on the first annotation vector set outputted by the encoder 10 and the attribute information of the target image outputted by the multi-instance model 40, and output the first guiding information to the reviewer 50.

The second guiding network model 60 is configured to generate second guiding information based on the second annotation vector set outputted by the reviewer 50 and the attribute information of the target image outputted by the multi-instance model 40, and output the second guiding information to the decoder 30. The encoder 30 encodes the second annotation vector set and the second initial input data based on the second guiding information, to obtain a descriptive statement of the target image.

In FIG. 6, a multi-instance model 40 is added prior to the first guiding network model 20 and the second guiding network model 60, and both the first guiding network model 20 and the second guiding network model 60 may determine guiding information according to the attribute information of the target image and the annotation vector set comprehensively, thereby further improving accuracy of the generated guiding information.

The systems for recognizing an image shown in FIG. 3 to FIG. 6 may all be obtained through training based on a plurality of sample images and descriptive statements of the multiple sample images. That is, the encoder, the first guiding network model, the reviewer, the second guiding network model, and the decoder described above may be obtained through training, and the first guiding network model and the second guiding network model may adaptively learn how to generate accurate guiding information in a training process, thereby improving accuracy of the generated guiding information.

Next, a method for recognizing an image provided in the embodiments of this application is described in detail with reference to the schematic structural diagrams of the systems for recognizing an image shown in the foregoing FIG. 3 to FIG. 6. FIG. 7 is a flowchart of a method for recognizing an image according to the invention.

The method is performed by a terminal. The terminal may be a mobile phone, a tablet computer, or a computer. The terminal may include the above system for recognizing an image, for example, may carry the above system for recognizing an image by using installed software. Referring to FIG. 7, the method includes steps 101 to 104.

In step 101, feature extraction is performed on a to-be-recognized target image by an encoder, to obtain a feature vector and a first annotation vector set.

When the to-be-recognized target image is recognized, the target image is inputted to the encoder, and feature extraction is performed on the target image by using the encoder, to obtain the feature vector and the first annotation vector set of the target image.

Specifically, global feature extraction is performed on the target image by using the encoder, to obtain the feature vector, and local feature extraction is performed on the target image by using the encoder, to obtain the annotation vector set. The feature vector is used for indicating a global feature of the target image, and an annotation vector in a second identification vector set is used for indicating a local feature of the target image.

Optionally, a CNN model may be used in the encoder. When the encoder performs feature extraction on the target image using the CNN model, the feature vector may be extracted by using the last fully connected layer of the CNN model, and the second annotation vector set may be extracted by using the last convolutional layer of the CNN model.

In step 102, initialization processing is performed on the feature vector, to obtain first initial input data.

The first initial input data refers to initial input data to be inputted to a next processing model of the encoder, and is used for indicating an initial state of the next processing model. The next processing model is, according to the invention, a decoder. The first initial input data includes first initial hidden state information and first initial memory cell state information. The first initial hidden state information is used for indicating an initial state of a hidden layer of the next processing model, and the first initial memory cell state information is used for indicating an initial state of a memory cell of the next processing model.

Specifically, initialization processing such as linear transformation is performed on the feature vector, to obtain the first initial input data. Moreover, initialization processing may be performed on the feature vector by using the encoder, to obtain the first initial input data. Alternatively, initialization processing may be performed on the feature vector outputted by the encoder by using another model, to obtain the first initial input data, which is not limited in this embodiment of this application.

For example, the encoder may include an RNN model and an initialization model. The RNN model is configured to perform feature extraction on the target image, and the initialization model is configured to perform initialization processing on the feature vector. After performing feature extraction on the image by using the RNN model, to obtain the feature vector, the encoder may perform initialization processing on the feature vector by using the initialization model, to obtain the first initial input data.

Alternatively, the encoder may also be configured to only perform feature extraction on the target image, and an initialization model is added posterior to the encoder. The initialization model is configured to perform initialization processing on the feature vector. After feature extraction is performed on the target image by using the encoder to obtain the feature vector, the encoder may output the feature vector to the initialization model. The initialization model performs initialization processing on the feature vector, to obtain the first initial input data.

In step 103, a first guiding network model generates first guiding information based on the first annotation vector set. The first guiding network model is configured to generate guiding information according to an annotation vector set of an image.

Specifically, the first guiding network model generates first guiding information based on the first annotation vector set in two implementation manners as follows.

In a first implementation manner which does not fall under the scope of the claims, linear transformation is performed on the first annotation vector set based on a first matrix constructed by model parameters in the first guiding network model, to obtain a second matrix, and the first guiding information is determined based on a maximum value of each row in the second matrix.

The first guiding network model may be obtained through training according to an annotation vector set of a sample image. In an embodiment, the models in FIG. 3 may be transformed into to-be-trained models, and then a transformed system for recognizing an image is trained based on multiple sample images and descriptive statements of the multiple sample images. In a training process, a to-be-trained encoder may extract annotation vectors from the multiple sample images respectively, and output the annotation vectors to a to-be-trained guiding network model for training. In this way, after the system for recognizing an image is trained completely, the to-be-trained guiding network model may be trained as the first guiding network model.

The to-be-trained encoder may be an encoder which is not trained yet, or may be a trained encoder, which is not limited in this embodiment of this application. Training the to-be-trained guiding network model by using the trained encoder can improve training efficiency of the entire system for recognizing an image, thereby improving training efficiency of the to-be-trained guiding network model.

The first annotation vector set is also in a matrix form, and the first matrix is a matrix that is constructed by model parameters in the first guiding network model and that is used to perform linear transformation on the first annotation vector set. Specifically, the first annotation vector set may be multiplied by the first matrix, to perform linear transformation on the first annotation vector set, to obtain the second matrix.

Specifically, the operation that the first guiding information is determined based on a maximum value of each row in the second matrix includes an operation as follows. A maximum value of each row in the second matrix is selected, then the selected maximum values form a matrix with one column according to a rule of not changing rows, and the formed matrix is determined as the first guiding information.

For example, assuming that the first annotation vector set is denoted as $A = [a_1, a_2, ..., a_k]$, $a_1$-$a_k$ denote annotation vectors extracted from the target image, the first matrix is denoted as $P_1$, and the first guiding information is denoted as v, the first guiding information may be determined according to the following formula (1).

$$v = \max([P_1 a_1, P_1 a_2, \ldots, P_1 a_k]) \quad (1)$$

where the max function refers to an operation of taking a maximum value of each row of a to-be-processed matrix, and forming a matrix with one column without changing the number of rows.

According to the invention, in a second implementation manner, in responsive to that the first guiding network model is configured to generate guiding information according to an annotation vector set and attribute information of an image, the target image is inputted to a multi-instance model, and the target image is processed by using the multi-instance model to obtain the attribute information of the target image. Linear transformation is performed on the first annotation vector set based on a third matrix constructed by model parameters in the first guiding network model, to obtain a fourth matrix. A fifth matrix is generated based on the fourth matrix and the attribute information of the target image. The first guiding information is determined based on a maximum value of each row in the fifth matrix. Attribute information of a sample image is used for indicating a predicted occurrence probability of a word in a descriptive statement of the sample image

The multi-instance model is obtained through training by using a plurality of sample images and descriptive statements of the multiple sample images, and that can output attribute information of the sample images. That is, the multi-instance model can predict a probability of possible words in the descriptive statements of the image. For example, the attribute information may be multi-instance learning (MIL) information or the like.

The first guiding network model may be obtained through training by using the annotation vector set and the attribute information of the sample image. For example, models in FIG. 4 may be transformed into to-be-trained models, and a transformed system for recognizing an image is trained based on multiple sample images and descriptive statements of the multiple sample images. In a training process, a to-be-trained encoder may extract an annotation vector from the sample image and output the annotation vector to a to-be-trained guiding network model, and the to-be-trained multi-instance model may process the image to obtain attribute information, and output the attribute information to the to-be-trained guiding network model, so that the to-be-trained guiding network model may be trained based on the annotation vectors of the sample images and the attribute information. In this way, after the entire image recognition system is trained completely, the to-be-trained guiding network model may be trained as the first guiding network model.

The to-be-trained encoder may be an encoder which is not trained yet, or may be a trained encoder, and the to-be-trained multi-instance model may be a multi-instance model which is not trained yet, or may be a trained multi-instance model, which are not limited in this embodiment of this application. Training the to-be-trained guiding network model by using the trained encoder and/or the trained multi-instance model can improve training efficiency of the entire system for recognizing an image, thereby improving training efficiency of the to-be-trained guiding network model.

The first annotation vector set is also in a matrix form, and the third matrix is a matrix that is constructed by model parameters of the first guiding network model and is configured to perform linear transformation on the first annotation vector set. Specifically, the first annotation vector set may be multiplied by the third matrix, to perform linear transformation on the first annotation vector set, and therefore obtain a fourth matrix. A fifth matrix is generated based on the fourth matrix and the attribute information of the target image.

The operation that the first guiding information is determined based on a maximum value of each row in a fifth matrix includes an operation as follows. A maximum value of each row in the fifth matrix is selected, then the selected maximum values form a matrix with one column according to a rule of not changing rows, and the formed matrix is determined as the first guiding information.

Specifically, assuming that the first annotation vector set is denoted as $A = [a_1, a_2, \ldots, a_k]$, $a_1$-$a_k$ denote annotation vectors extracted from the target image, the third matrix is denoted as $P_2$, the attribute information of the target image is denoted as e, and the first guiding information is denoted as v, the first guiding information v may be determined according to the following formula (2).

$$v = \max([e, P_2 a_1, P_2 a_2, \ldots, P_2 a_k]) \quad (2)$$

where the max function refers to an operation of taking a maximum value of each row of a to-be-processed matrix, and forming a matrix with one column without changing the number of rows.

As can be known from the foregoing, the first guiding network model may be obtained through learning, that is, may be obtained through training by using a plurality of sample images and descriptive statements of the multiple sample images, and guiding information may be automatically learned in a training process. Therefore, the first guiding information generated by using the first guiding network model has higher accuracy, and the generated first guiding information can facilitate accurating guiding an encoding process of the encoding, thereby improving quality of a generated descriptive statement of the target image.

In step 104, a descriptive statement of the target image is determined based on the first guiding information, the first annotation vector set and the first initial input data by using a decoder.

In this embodiment of this application, the determining a descriptive statement of the target image based on the first guiding information, the first annotation vector set, and the first initial input data by using a decoder may include the following two implementations:.

In a first implementation manner and according to the invention, the first annotation vector set and the first initial input data are decoded based on the first guiding information by using the decoder, to obtain the descriptive statement of the target image.

An RNN model, for example, an LSTM network model is used in the decoder.

Specifically, the operation that the first annotation vector set and the first initial input data are decoded based on the first guiding information by using the decoder, to obtain the descriptive statement of the target image may include the following steps 1) to 3).

In step 1), wherein the first RNN model is configured to perform M first sequential steps, for each first sequential step performed by the first RNN model, input data of the first sequential step is determined based on the first target guiding information.

M denotes the number of circularly processing the input data by the first RNN model, M is a positive integer, and each first sequential step is a step of processing the input data by the first RNN model.

The operation that the input data of the first sequential step is determined based on the first guiding information includes an operation that the input data of the first sequential step is determined based on the first guiding information according to the following formula (3).

$$x_t = Ey_t + Qv \quad (3)$$

where t denotes the first sequential step, $x_t$ denotes the input data of the first sequential step, E denotes a word embedding matrix and denotes a model parameter of the first RNN model, $y_t$ denotes an one-hot vector of a word corresponding to the first sequential step. The word corresponding to the first sequential step is determined based on output data of a previous sequential step of the first sequential step, Q denotes a sixth matrix and denotes a model parameter of the first RNN model, and $v$ denotes the first guiding information.

In step 2), output data of each of the first sequential steps is determined based on the input data of the first sequential step, the first annotation vector set, and the output data of the previous sequential step of the first sequential step.

According to the invention, the input data of the first sequential step, the first annotation vector set, and the output data of the previous sequential step of the first sequential step is processed by using the first RNN model, to obtain the output data of the first sequential step.

The output data of the first sequential step may include hidden state information and memory cell state information. Moreover, in a case that the first sequential step is placed as the first one of the M first sequential steps, the output data of the previous sequential step of the first sequential step is determined based on the first initial input data. For example, when the first initial input data includes first initial hidden state information $h_0$ and first initial memory cell state information $c_0$, and the first sequential step is the first one sequential step, the output data of the previous sequential step of the first sequential step includes $h_0$ and $c_0$.

In this embodiment of this application, in order to improve quality of the generated descriptive statement, the used first RNN model may be an LSTM network model. With taking the LSTM network model as an example, the operation that output data of the first sequential step is determined based on the input data of the first sequential step, the first annotation vector set, and output data of a previous sequential step of the first sequential step may be abstractly represented as the following formula (4):

$$h_t = \mathrm{LSTM}(x_t, h_{t\text{-}1}, A) \quad (4)$$

where t denotes the first sequential step, $x_t$ denotes the input data of the first sequential step, $h_{t-1}$ denotes hidden state information of a previous sequential step of the first sequential step, A denotes the first annotation vector set, $h_t$ denotes hidden state information of the first sequential step, and LSTM represents a processing process of the LSTM network model.

Specifically, the processing process of the LSTM network model may be represented by using the following formula:

$$\begin{cases} \begin{pmatrix} i_t \\ f_t \\ o_t \\ g_t \end{pmatrix} = \begin{pmatrix} \sigma \\ \sigma \\ \sigma \\ \tanh \end{pmatrix} T \begin{pmatrix} x_t \\ h_{t-1} \\ d_t \end{pmatrix} \\ c_t = f_t \odot c_{t-1} + i_t \odot g_t \\ h_t = o_t \odot \tanh(c_t) \end{cases} \quad (5)$$

where it, $f_t$, ct, and $o_t$ are output data of the first sequential step in an input gate, a forget gate, a memory gate, and an output gate respectively, σ denotes an activation function of the LSTM network model, such as a sigmoid function, tanh() denotes a hyperbolic tangent function, T denotes a matrix used for linear transformation, $x_t$ is denotes the input data of the first sequential step, $h_{t-1}$ denotes hidden state information of a previous sequential step of the first sequential step, dt denotes target data determined based on the first annotation vector set, $c_t$ idenotes memory cell state information of the first sequential step, $c_{t-1}$ denotes memory cell state information of a previous sequential step of the first sequential step, and $h_t$ denotes hidden state information of the first sequential step.

The target data dt may be a first annotation vector set, or may be a context vector. The context vector is determined based on the first annotation vector set and hidden state information of the previous sequential step of the first sequential step through by using an attention model.

The attention model may be configured to determine a region, which is paid attention to in the previous sequential step, of the target image, that is, may calculate a weight for each annotation vector in A, and a higher weight of the annotation vector indicates that more attention is paid to the annotation vector.

In a possible implementation, the LSTM network model may be an LSTM network model provided with an attention model. After the first annotation vector set and the hidden state information of the previous sequential step of the first sequential step are obtained, a context vector may be determined based on the first annotation vector set and the hidden state information of the previous sequential step of the first sequential step by using the attention model, and the context vector is used as the target data.

Specifically, the attention model may calculate a similarity $e_i$ between any annotation vector $a_i$ in $\mathcal{A}$ and $h_{t-1}$, then calculate a weight $w_i = \frac{\exp(a_i)}{\sum_j \exp(a_j)}$ of attention of $a_i$, and generate a context vector $z_t = \Sigma\, w_i\, a_i$ by using the weight of each annotation vector.

In step 3), the descriptive statement of the target image is determined based on all output data of the M first sequential steps.

Specifically, output data of all first sequential steps in the M first sequential steps may be combined, to obtain the descriptive statement of the target image. In actual application, output data of each first sequential step is usually a word, and then M words outputted by the M first sequential step s may be combined, to obtain the descriptive statement of the target image.

With taking the target image shown in FIG. 3 as an example, if all output data of the M first sequential steps may include boy, to, girl, send, and flowers, the descriptive statement of the target image is "A boy sends flowers to a girl".

Further, in order to obtain the above first guiding network model which can accurately generate the guiding information based on the annotation vector set of the target image, before feature extraction is performed on the target image by the encoder to obtain the feature vector and the first annotation vector set, a to-be-trained first encoder, a to-be-trained first guiding network model and a to-be-trained first decoder may be combined to obtain a first cascaded network model, and the first cascaded network model may be trained based on multiple sample images and descriptive statements of the multiple sample images using a gradient descent method, to obtain the encoder, the first guiding network model and the decoder.

That is, the to-be-trained first encoder, the to-be-trained first guiding network model and the to-be-trained first decoder may be constructed in a connection manner shown FIG. 3 or FIG. 4 as a system for recognizing an image which can process an image, to obtain a descriptive statement of the image, and the system for recognizing an image is trained based on multiple sample images and descriptive statements of the multiple sample images. In a training process of the system for recognizing an image, the to-be-trained first guiding network model may be trained, and the to-be-trained first guiding network model can adaptively learn guiding information in the training process to ensure that accurate guiding information can be generated.

In a process of training the to-be-trained first guiding network model, a multilabel margin loss function may be used as a loss function of the to-be-trained first guiding network model, and model parameters of the to-be-trained first guiding network model are regulated based on the loss function using a random gradient descent method, to obtain the first guiding network model.

In actual training, an annotated training set may be used to perform training. The training set is a set of a pair of <sample image, descriptive statement>, such as an MSCOCO data set (a common data set).

The to-be-trained first encoder may be an encoder which is not trained yet, or may be a trained encoder, which is not limited in this embodiment of this application. For example, a CNN model pre-trained on the ImageNet (a computer visual system recognition project name, which is the largest image recognition database in the world current) may be used in the to-be-trained first encoder. The CNN model may be an inception V3 model (a CNN model), a Resnet model (a CNN model), or a VGG model (a CNN model), or the like.

The first guiding network model is trained by using the trained encoder as the to-be-trained first encoder, thereby improving training efficiency of the entire first cascaded network mode, and further improving training efficiency of the first guiding network model.

In this embodiment of this application, a process of recognizing the target image to obtain the descriptive statement of the target image and a process of training the guiding network model may be performed on the same terminal, or may be performed on different terminals, which is not limited in this embodiment of this application.

In a second implementation manner that does not fall under the scope of the claims, a second annotation vector set and second initial input data are determined based on the first guiding information, the first annotation vector set and the first initial input data by using a reviewer. Second guiding information is generated based on the second annotation vector set by using a second guiding network model.. The second annotation vector set and the second initial input data are encoded based on the second guiding information by using the encoder, to obtain the descriptive statement of the target image.

It should be illustrated that the second implementation manner is described in detail in the following embodiment shown in FIG. 8, and is not described herein repeatedly in this embodiment of this application.

In this embodiment of this application, a guiding network model is added between the encoder and the decoder. After an annotation vector set is extracted from an image, guiding information may be generated based on the annotation vector set by using the guiding network model. Because the guiding network model is obtained through training based on an annotation vector set of a sample image, the guiding network model can learns adaptively how to accurately generate the guiding information according to the annotation vector set of the image in a training process. Therefore, the guiding information generated by the guiding network model has high accuracy, thereby accurately guiding an encoding process of the image, and improving quality of the generated descriptive statement.

Next, a method for recognizing an image provided in the embodiments of this application is described in detail with reference to the schematic structural diagrams of the systems for recognizing an image shown in the above FIG. 5 and FIG. 6. FIG. 8 is a flowchart of another method for recognizing an image according to an embodiment of this application. The method is applied to a terminal. Referring to FIG. 8, the method includes steps 201 to 206.

In step 201, feature extraction is performed on a to-be-recognized target image by an encoder, to obtain a feature vector and a first annotation vector set.

In step 202, initialization processing is performed on the feature vector, to obtain first initial input data.

In step 203, first guiding information is generated based on the first annotation vector set by using a first guiding network model.

For specific implementations of step 201 to step 203, reference may be made to the related description of step 101 to step 103. This is not described herein again in this embodiment of the application.

In step 204, a second annotation vector set and second initial input data are determined based on the first guiding information, the first annotation vector set and the first initial input data by using a reviewer.

In the embodiment of this application, both a decoder and the reviewer usually use an RNN model, or certainly may use other models, which is not limited in this embodiment of this application.

The reviewer is configured to further dig an interactive relationship between a global feature and a local feature extracted from an image by the encoder, and generate initial input data, that is, the second initial input data, for the decoder based on the interactive relationship between the global feature and the local feature, to improve performance of the decoder, and further improve quality of a generated descriptive statement.

The first initial input data refers to input data to be inputted to the reviewer, and is used for indicating an initial state of the reviewer which may include first initial hidden state information and first initial memory cell state information. The first initial hidden state information is used for indicating an initial state of a hidden layer of the reviewer, and the first initial memory cell state information is used for indicating an initial state of a memory cell of the reviewer.

The second initial input data refers to input data to be inputted to the decoder, and is used for indicating an initial state of the decoder which may include second initial hidden state information and second initial memory cell state information. The second initial hidden state information is used for indicating an initial state of a hidden layer of the decoder, and the second initial memory cell state information is used for indicating an initial state of a memory cell of the decoder.

Specifically, an operation that a second annotation vector set and second initial input data are determined based on the first guiding information, the first annotation vector set and the first initial input data by using a reviewer may include step 1) to 3) as follows.

In step 1), in a case that the first reviewer uses a second RNN model, and the second RNN model is configured to perform N second sequential steps, for each second sequential step performed by the second RNN model, input data of the second sequential step is determined based on the first guiding information.

N denotes the number of circularly processing the input data by the second RNN model, and N is a positive integer. Each second sequential step is a step of processing the input data by the second RNN model.

Specifically, the input data of the second sequential step may be determined based on the second guiding information according to the following formula (6).

$$x'_t = E' y'_t + Q' v' \qquad (6)$$

where t denotes the second sequential step, $x'_t$ is denotes the input data of the second sequential step, $E'$ denotes a word embedding matrix and denotes a model parameter of the second RNN model, Q' denotes a seventh matrix and denotes a model parameter of the second RNN model, and v' denotes the second guiding information.

In step 2), output data of the second sequential step is determined based on the input data of the second sequential step, the first annotation vector set, and output data of a previous second sequential step of the second sequential step.

The output data of the second sequential step may include hidden state information and memory cell state information. In a case that the second sequential step is the first one of the N second sequential steps, the output data of the previous second sequential step of the second sequential step is determined based on the first initial input data.

In this embodiment of this application, the input data of the second sequential step, the second annotation vector set, and the output data of the previous second sequential step of the second sequential step may be processed by using the second RNN model, to obtain the output data of the second sequential step.

Specifically, the output data of the second sequential step may be determined based on the input data of the second sequential step, the first annotation vector set, and the output data of the previous second sequential step of the second sequential step according to the foregoing method for determining output data of the first sequential step based on the input data of the first sequential step, the first annotation vector set, and output data of a previous sequential step of the first sequential step. For a specific implementation, reference may be made to the foregoing related description. Details are not described herein again.

In step 3), the second initial input data is determined based on output data of the last second sequential step in the N second sequential steps.

Specifically, the output data of the last second sequential step may be determined as the second initial input data. For example, hidden state information and memory cell state information of the last second sequential step may be determined as the second initial input data, that is, initial hidden state information and initial memory cell state information of the target encoder.

In step 4), the second annotation vector set is determined based on all output data of the N second sequential steps.

Specifically, a set of hidden state information of all sequential steps in the N second sequential steps may be determined as the second annotation vector set.

In step 205, second guiding information is determined based on the second annotation vector set by using a second target guiding network model,. The second guiding network model is configured to generate guiding information according to an annotation vector set.

Specifically, the second guiding information may be generated based on the second annotation vector set by using the second guiding network model , with reference to the method for generating first guiding information based on the first annotation vector set by the first guiding network model in step 103 in the foregoing embodiment of FIG. 7. For a specific implementation, reference may be made to the related description of the foregoing step 103. Details are not described herein again.

The second guiding network model may be obtained through training based on the sample images, along with the first guiding network model, and may automatically learn guiding information in a training process. Therefore, the guiding information generated by the first guiding network model and the second guiding network model has high accuracy. The generated guiding information can accurately guide an encoding process of the encoding, thereby improving quality of the generated descriptive statement of the target image.

In step 206, the second annotation vector set and the second initial input data are decoded based on the second guiding information by using the decoder, to obtain the descriptive statement of the target image.

Specifically, the second annotation vector set and the second initial input data may be decoded based on the second guiding information by using the decoder to obtain the descriptive statement of the target image, with reference to the method for decoding the first annotation vector set and the first initial input data by the decoder based on the first guiding information to obtain the descriptive statement of the target image in step 104 in the embodiment of the foregoing FIG. 7,.

For a specific implementation, reference may be made to related description of the first implementation manner in the foregoing step 104, which is not described in detail here anymore.

Further, in order to obtain the first guiding network model that can accurately generate the first guiding information based on the first annotation vector set of the target image, and the second guiding network model that can accurately generate the second guiding information based on the second annotation vector set, a to-be-trained second encoder, a to-be-trained second guiding network model, a to-be-trained reviewer, a to-be-trained third guiding network model and a second to-be-trained decoder may be further combined to obtain a second cascaded network model before the performing feature extraction on a target image by an encoder to obtain a feature vector and a first annotation vector set, and the second cascaded network model is trained based on multiple sample images and descriptive statements of the multiple sample images by using a gradient descent method, to obtain the encoder, the first guiding network model, the reviewer, the second guiding network model and the decoder.

That is, the to-be-trained second encoder, the to-be-trained second guiding network model, the to-be-trained reviewer, the to-be-trained third guiding network model, and the to-be-trained second decoder may be constructed according to a connection manner of FIG. 5 as a system for recognizing an image that can process an image to obtain a descriptive statement of the image, and the system for recognizing an image is trained based on multiple sample images and descriptive statements of the multiple sample images. In a process of training the system for recognizing an image, the to-be-trained second guiding network model and the to-be-trained third guiding network model may be trained, and the to-be-trained second guiding network model and the to-be-trained third guiding network model can adaptively learn guiding information in the training process, to ensure that accurate guiding information is generated.

The to-be-trained second encoder may be an encoder which is not trained yet, or may be a trained encoder, and the to-be-trained reviewer may be a reviewer which is not trained yet, or may be a trained reviewer, which is not limited in this embodiment of this application.

It should be illustrated that the first guiding network model and the second guiding network model are trained by using the trained encoder as the to-be-trained second encoder or using the trained reviewer as the to-be-trained reviewer, thereby improving training efficiency of the entire second cascaded network model, and further improving training efficiency of the first guiding network model and the second guiding network model.

It should further illustrated that in this embodiment of this application, a process of recognizing the target image to obtain the descriptive statement of the target image and a process of training the guiding network model may be performed on the same terminal, or may be performed on different terminals, which is not limited in this embodiment of this application.

In this embodiment of this application, a guiding network model is added between the encoder and the decoder. After an annotation vector set is extracted from an image, guiding information may be generated based on the annotation vector set by using the guiding network model. Because the guiding network model is obtained through training by using a sample image, the guiding network model can learns adaptively the guiding information in a training process. Therefore, the guiding information generated by the guiding network model has high accuracy, thereby accurately guiding an encoding process of the image, and improving quality of the generated descriptive statement.

Further, a reviewer is added between the encoder and the decoder, and the reviewer may be further configured to further dig an interactive relationship between a local feature and a global feature of a target image, and the features of the target image can be accurately indicated based on the generated second annotation vector set and second initial input data, thereby further improving system performance of the system for recognizing an image, and improving quality of the generated descriptive statement.

FIG. 9 is a schematic structural diagram of an apparatus for recognizing an image according to an embodiment of this application. The apparatus may be a terminal. Referring to FIG. 9, the apparatus includes: an extracting module 301, a processing module 302, a generating module 303 and a determining module 304.

The extracting module 301 is configured to perform feature extraction on a to-be-recognized target image by an encoder, to obtain a feature vector and a first annotation vector set.

The processing module 302 is configured to perform initialization on the feature vector, to obtain first initial input data.

The generating module 303 is configured to generate first guiding information based on the first annotation vector set by using a first guiding network model. The first guiding network model is configured to generate guiding information based on an annotation vector set of any image.

The determining module 304 is configured to determine a descriptive statement of the target image based on the first guiding information, the first annotation vector set, and the first initial input data by using a decoder.

Optionally, referring to FIG. 10, the generating module 303 includes a first linear transformation unit 3031 and a first determining unit 3032.

The first linear transformation unit 3031 is configured to perform linear transformation on the first annotation vector set based on a first matrix constructed by model parameters in the first guiding network model, to obtain a second matrix.

The first determining unit 3032 is configured to determine the first guiding information based on a maximum value of each row in the second matrix.

Optionally, referring to FIG. 11, the first guiding network model is configured to generate guiding information based on an annotation vector set and attribute information of an image. The attribute information is used for indicating a predicted occurrence probability of a word in a descriptive statement of the image.

The generating module 303 includes a processing unit 3033, a second linear transformation unit 3034, a first generating unit 3035 and a second determining unit 3036.

The processing unit 3033 is configured to process the target image by a multi-instance model with taking the target image as an input of the multi-instance model, to obtain attribute information of the target image.

The second linear transformation unit 3034 is configured to perform linear transformation on the first annotation vector set based on a third matrix constructed by model parameters in a second guiding network model, to obtain a fourth matrix.

The first generating unit 3035 is configured to generate a fifth matrix based on the fourth matrix and the attribute information of the target image.

The second determining unit 3036 is configured to determine the first guiding information based on a maximum value of each row in the fifth matrix.

Optionally, the determining model 304 is configured to decode the first annotation vector set and the first initial input data based on the first guiding information by the decoder, to obtain the descriptive statement of the target image.

Optionally, referring to FIG. 12, the determining module 304 includes a third determining unit 3041, a fourth determining unit 3042 and a fifth determining unit 3043.

The third determining unit 3041 is configured to determine, in a case that a recurrent neutral network (RNN) model is used in the decoder, and the first RNN model is configured to perform M first sequential steps, for each first sequential step performed by the first RNN model, input data of the first sequential step based on the first guiding information.

M denotes the number of of circularly processing the input data by the first RNN model, and M is a positive integer. Each first sequential step is a step of processing the input data by the first RNN model.

The fourth determining unit 3042 is configured to determine output data of the first sequential step based on the input data of the first sequential step, the first annotation vector set, and output data of a previous sequential step of the first sequential step.

In a case that the first sequential step is placed as the first one of the M first sequential steps, the output data of the previous sequential step of the first sequential step is determined based on the first initial input data.

The fifth determining unit 3043 is configured to determine the descriptive statement of the target image based on all output data of the M first sequential steps.

Optionally, the third determining unit 3041 is configured to

determine the input data of the first sequential step based on the first guiding information by using the following formula:

$$x_t = Ey_t + Qv$$

$x_t$ denotes the input data of the first sequential step, E denotes a word embedding matrix and denotes a model parameter of the first RNN model, $y_t$ denotes an one-hot vector of a word corresponding to the first sequential step. The word corresponding to the first sequential step is determined based on output data of a previous sequential step of the first sequential step, Q denotes a sixth matrix and denotes a model parameter of the first RNN model, and $v$ denotes the first guiding information.

Optionally, referring to FIG. 13, the apparatus further includes a first combining module 305 and a first training module 306.

The first combining module 305 is configured to combine a to-be-trained first encoder, a to-be-trained first guiding network model, and a to-be-trained first decoder, to obtain a first cascaded network model.

The first training module 306 is configured to train the first cascaded network model based on multiple sample images and descriptive statements of the multiple sample images by using a gradient descent method, to obtain the encoder, the first guiding network model and the decoder.

Optionally, referring to FIG. 14, the determining model 304 includes a sixth determining unit 3044, a second generating unit 3045 and an encoding unit 3046.

The sixth determining unit 3044 is configured to determine a second annotation vector set and second initial input data based on the first guiding information, the first annotation vector set, and the first initial input data by a reviewer.

The second generating unit 3045 is configured to generate second guiding information based on the second annotation vector set by using a second guiding network model.. The second guiding network model is obtained through training by using sample images.

The encoding unit 3046 is configured to encode the second annotation vector set and the second initial input data based on the second guiding information by using the encoder, to obtain the descriptive statement of the target image.

Optionally, the sixth determining unit 3044 is configured to perform the following operations.

In a case that a second RNN model is used in a first reviewer, and the second RNN model is configured to perform N second sequential steps, for each second sequential step performed by the second RNN model, input data of the second sequential step is determined based on the first target guiding information.

N denotes the number of circularly processing the input data by the second RNN model, and N is a positive integer. Each second sequential step is a step of processing input data by the second RNN model.

Output data of the second sequential step is determined based on the input data of the second sequential step, the first annotation vector set, and output data of a previous second sequential step of the second sequential step.

In a case that the second sequential step is the first one of in the N second sequential steps, the output data of the previous second sequential step of the second sequential step is determined based on the first initial input data.

The second initial input data is determined based on output data of the last second sequential step in the N second sequential steps.

The second annotation vector set is determined based on all output data of the N second sequential steps.

Optionally, referring to FIG. 15, the apparatus further includes:
a second combining module 307 and a second training module 308.

The second combining module 307 is configured to combine a to-be-trained second encoder, a to-be-trained second guiding network model, a to-be-trained reviewer, a to-be-trained third guiding network model and a to-be-trained second decoder, to obtain a second cascaded network model.

The second training module 308 is configured to train the second cascaded network model based on multiple sample images and descriptive statements of the multiple sample images by using a gradient descent method, to obtain the encoder, the first guiding network model, the reviewer, the second guiding network model and the decoder.

In this embodiment of this application, a guiding network model is added between the encoder and the decoder. After an annotation vector set is extracted from an image, guiding information may be generated based on the annotation vector set by using the guiding network model. Because the guiding network model is obtained through training by using an annotation vector set of a sample image, the guiding network model can learns adaptively how to accurately generate the guiding information according to the annotation vector set of the image in a training process. Therefore, the guiding information generated by the guiding network model has high accuracy, thereby accurately guiding an encoding process of the image, and improving quality of the generated descriptive statement.

It should be illustrated that when the apparatus for recognizing an image provided in the foregoing embodiment performs image recognition, only divisions of the foregoing functional modules are described by using an example. During actual application, the foregoing functions may be allocated to and completed by different functional modules according to requirements. That is, the internal structure of the apparatus is divided into different functional modules, to complete all or some of the foregoing described functions. In addition, the apparatus for recognizing an image according to the above embodiment has the same concept as the method embodiment for recognizing an image . For the specific implementation process, refer to the method embodiments, and details are not described herein again.

FIG. 16 is a schematic structural diagram of a terminal 400 according to an embodiment of this application. Referring to FIG. 16, the terminal 400 may include a communications unit 410, a memory 420 including one or more computer readable storage media, an input unit 430, a display unit 440, a sensor 450, an audio circuit 460, a Wireless Fidelity (WiFi) module 470, a processor 480 including one or more processing cores, a power supply 490, and the like. A person skilled in the art may understand that the structure of the terminal shown in FIG. 16 does not constitute a limitation to the terminal, and the terminal may include more components or fewer components than those shown in FIG. 16, or some components may be combined, or a different component deployment may be used.

The communications unit 410 may be configured to receive and transmit signals during an information receiving and transmitting process or a call process. The communications unit 410 may be a network communications device, such as a radio frequency (RF) circuit, a router, or a modem. Particularly, when the communications unit 410 is the RF circuit, the communications unit 410 receives downlink information of a base station, and then hands over the downlink information to one or more processors 480 for processing. In addition, the communications unit 410 transmits related uplink data to the base station. Generally, the RF circuit as the communications unit includes, but is not limited to, an antenna, at least one amplifier, a tuner, one or more oscillators, a subscriber identity module (SIM) card, a transceiver, a coupler, a low noise amplifier (LNA), a duplexer, and the like. In addition, the communications unit 410 may further communicate with a network and other devices through wireless communication. The wireless communication may use any communications standard or protocol, which includes, but is not limited to, Global System for Mobile communications (GSM), General Packet Radio Service (GPRS), Code Division Multiple Access (CDMA), Wideband Code Division Multiple Access (WCDMA), Long Term Evolution (LTE), e-mail, Short Messaging Service (SMS), and the like. The memory 420 may be configured to store a software program and module. The processor 480 runs the software program and module stored in the memory 420, to implement various functional applications and data processing. The memory 420 may mainly include a program storage area and a data storage area. The program storage area may store an operating system, an application program required by at least one function (such as a sound playback function and an image display function), and the like. The data storage area may store data (such as audio data and an address book) created according to the use of the terminal 400, and the like. In addition, the memory 420 may include a high-speed random access memory, and may further include a non-transitory memory such as at least one magnetic disk storage device or a flash memory device, or another transitory solid storage device. Correspondingly, the memory 420 may further include a memory controller, to provide access of the processor 480 and the input unit 430 to the memory 420.

The input unit 430 may be configured to receive inputted digit or character information, and generate a keyboard, mouse, joystick, optical, or track ball signal input related to the user setting and function control. Preferably, the input unit 430 may include a touch-sensitive surface 431 and another input device 432. The touch-sensitive surface 431, which may also be referred to as a touch screen or a touch panel, may collect a touch operation of a user on or near the touch-sensitive surface (such as an operation of a user on or near the touch-sensitive surface 431 by using any suitable object or accessory, such as a finger or a stylus), and drive a corresponding connection apparatus according to a preset program. Optionally, the touch-sensitive surface 431 may include two parts including a touch detection apparatus and a touch controller. The touch detection apparatus detects a touch position of the user, detects a signal generated by the touch operation, and transfers the signal to the touch controller. The touch controller receives the touch information from the touch detection apparatus, converts the touch information into touch point coordinates, and transmits the touch point coordinates to the processor 480. In addition, the touch controller can receive a command transmitted by the processor 480 and execute the command. In addition, the touch-sensitive surface 431 may be a resistive, capacitive, infrared, or surface sound wave type touch-sensitive surface 431. In addition to the touch-sensitive surface 431, the input unit 430 may further include another input device 432. Preferably, the another input device 432 may include, but is not limited to, one or more of a physical keyboard, a functional key (such as a volume control key and a switch key), a track ball, a mouse, and a joystick.

The display unit 440 may be configured to display information inputted by the user or information provided for the user, and various graphical user interfaces of the terminal 400. These graphical user interfaces may include a graph, a text, an icon, a video and any combination thereof. The display unit 440 may include a display panel 441. Optionally, the display panel 441 may be configured by using a liquid crystal display (LCD), an organic light-emitting diode (OLED), or the like. Further, the touch-sensitive surface 431 may cover the display panel 441. After detecting a touch operation on or near the touch-sensitive surface 431, the touch-sensitive surface 431 transfers the touch operation to the processor 480, so as to determine a type of the touch event. Then, the processor 480 provides a corresponding visual output on the display panel 441 according to the type of the touch event. Although, in FIG. 16, the touch-sensitive surface 431 and the display panel 441 are used as two separate parts to implement input and output functions, but in some embodiments, the touch-sensitive surface 431 and the display panel 441 may be integrated to implement the input and output functions.

The terminal 400 may further include at least one sensor 450 such as an optical sensor, a motion sensor, and other sensors. The optical sensor may include an ambient light sensor and a proximity sensor. The ambient light sensor may adjust luminance of the display panel 441 according to the luminance of the ambient light, and the proximity sensor may switch off the display panel 441 and/or a backlight when the terminal 400 is moved to the ear. As one type of the motion sensor, a gravity acceleration sensor may detect a value of acceleration at each direction (which generally is triaxial), may detect a value and a direction of the gravity when being static, and may be configured to identify an application of a mobile phone gesture (such as a handover between horizontal and longitudinal screens, a related game, and gesture calibration of a magnetometer), a related function of vibration identification (such as a pedometer and a knock), and the like. Another sensor, such as a gyroscope, a barometer, a hygrometer, a thermometer, and an infrared sensor, may also be configured in the terminal 400, which are not described herein again.

The audio circuit 460, a speaker 461, and a microphone 462 may provide audio interfaces between the user and the terminal 400. The audio circuit 460 may transmit, to the speaker 461, an electric signal that is converted from received audio data. The speaker 461 converts the electric signal into a voice signal for outputting. On the other hand, the microphone 462 converts a collected voice signal into an electric signal. The audio circuit 460 receives the electric signal and converts the electric signal into audio data, and outputs the audio data to the processor 480 for processing. The processor 480 processes the audio data and transmits the audio data to another terminal by using the communications unit 410, or outputs the audio data to the memory 420 for further processing. The audio circuit 460 may further include an earplug jack, to provide communication between a peripheral earphone and the terminal 400.

To implement wireless communication, the terminal may be provided with a wireless communications unit 470, where the wireless communications unit 470 may be a WiFi module. WiFi belongs to the short distance wireless transmission technology. The terminal 400 may help, by using the wireless communications unit 470, a user with receiving and transmitting an email, browsing a web page, and accessing stream media, and the like, and provide wireless broadband Internet access for the user. Although the wireless communications unit 470 is shown in FIG. 16, it may be understood that, the wireless communications unit does not belong to a necessary constitution of the terminal 400, and can be omitted within the scope of the essence of the present disclosure according to requirements.

The processor 480 is a control center of the terminal 400, and is connected to various components of the mobile phone by using various interfaces and lines. By running or executing the software program and/or module stored in the memory 420, and invoking data stored in the memory 420, the processor 480 performs various functions and data processing of the terminal 400, thereby performing overall monitoring on the mobile phone. Optionally, the processor 480 may include one or more processing cores. Preferably, the processor 480 may be integrated with an application processor and a modem processor. The application processor mainly processes an operating system, a user interface, an application program, and the like. The modem processor mainly processes wireless communication. It may be understood that the foregoing modem processor may alternatively not be integrated into the processor 480.

The terminal 400 further includes the power supply 490 (such as a battery) for supplying power to the components. Preferably, the power supply may be logically connected to the processor 480 by using a power management system, thereby implementing functions such as charging, discharging, and power consumption management by using the power management system. The power supply 460 may further include one or more direct current or alternating current power supplies, a re-charging system, a power failure detection circuit, a power supply converter or inverter, a power supply state indicator, and any other component.

Although not shown in FIG. 16, the terminal 400 may further include a camera, a Bluetooth module, and the like, which are not described repeatedly herein anymore.

In this embodiment, the terminal includes a processor and a memory. The memory further stores at least one instruction, at least one program, and a code set or an instruction set. The instruction, the program, and the code set or the instruction set are loaded and executed by the processor to implement the method for recognizing an image according to embodiment of the foregoing FIG. 7 or FIG. 8.

In another embodiment, a computer readable storage medium is further provided. The storage medium stores at least one instruction, at least one segment of program, and a code set or an instruction set. The instruction, the program, and the code set or the instruction set are loaded and executed by a processor to implement the method for recognizing an image according to embodiment of the foregoing FIG. 7 or FIG. 8.

A person of ordinary skill in the art may understand that all or some of the steps of the foregoing embodiments may be implemented by using hardware, or may be implemented by a program instructing relevant hardware. The program may be stored in a computer readable storage medium. The above storage medium may be a read-only memory, a magnetic disk, an optical disc, or the like.

## Claims

**1.** A method for recognizing an image to be recognized by a blind person, performed by a terminal, and comprising:

performing (101) feature extraction on a to-be-recognized target image by using an encoder (10), to obtain a feature vector for indicating a global feature of the target image and a first annotation vector set for indicating a local feature of the target image;
performing initialization processing on the feature vector (102), to obtain first initial input data for indicating an initial state of a decoder (30), wherein the initialization processing comprises linear transformation to be performed on the feature vector, and the first initial input data includes first initial hidden state information for indicating an initial state of a hidden layer of the decoder (30) and a first initial memory cell state information for indicating an initial state of a memory cell of the decoder (30);
generating (103) first guiding information based on the first annotation vector set using a first guiding network model (20), with the first guiding network model (20) being configured to generate guiding information according to an annotation vector set of an image; and
determining (104) a descriptive statement of the target image based on the first guiding information, the first annotation vector set and the first initial input data by the decoder (30), and
transforming the determined descriptive statement into voice and/or Braille for the blind person to recognize the image,
wherein the first guiding network model (20) is configured to generate guiding information according to the annotation vector set and attribute information of an image, and the attribute information is used for indicating a predicted occurrence probability of a word in a descriptive statement of the image,
**characterized in that**
the generating (103) the first guiding information based on the first annotation vector set using the first guiding network model (20) comprises:

inputting the target image to a multi-instance model (40), processing the target image by using the multi-instance model (40), to obtain the attribute information of the target image, wherein the multi-instance model (40) is obtained through training by using a plurality of sample images and descriptive statements of the multiple sample images;
performing linear transformation on the first annotation vector set based on a third matrix constructed by model parameters in the first guiding network model (20), to obtain a fourth matrix;
generating a fifth matrix based on the fourth matrix and the attribute information of the target image; and
determining the first guiding information based on a maximum value of each row in the fifth matrix,
wherein the determining (104) the descriptive statement of the target image based on the first guiding information, the first annotation vector set and the first initial input data by using the decoder (30) comprises:
decoding the first annotation vector set and the first initial input data based on the first guiding information by using the decoder (30), to obtain the descriptive statement of the target image, wherein the decoding the first annotation vector set and the first initial input data based on the first guiding information by using the decoder (30), to obtain the descriptive statement of the target image comprises:

determining, using a first recurrent neural network, RNN model, in the decoder (30), and the first RNN model is configured to perform M first sequential steps, for each of the first sequential steps performed by the first RNN model, input data of the first sequential step based on the first guiding information,
wherein M denotes a number of circularly processing the input data by the first RNN model, M is a positive integer, and each of the first sequential steps is a step of processing the input data by the first RNN model;
determining output data of each of the first sequential steps based on the input data of the first sequential step, the first annotation vector set and output data of a previous sequential step of the first sequential step, wherein
when the first sequential step is the first one in the M first sequential steps, the output data of the previous sequential step of the first sequential step is determined based on the first initial input data; and
determining the descriptive statement of the target image based on all output data of the M first sequential steps.

**2.** The method according to claim 1,
wherein the determining input data of the first sequential step based on the first guiding information comprises:
determining the input data of the first sequential step based on the first guiding information according to a formula as follows

$$x_t = Ey_t + Qv$$

wherein t denotes the first sequential step, $x_t$ denotes the input data of the first sequential step, E denotes a word embedding matrix and denotes a model parameter of the first RNN model, $y_t$ denotes an one-hot vector of a word corresponding to the first sequential step, and the word corresponding to the first sequential step is determined based on output data of a previous sequential step of the first sequential step, Q denotes a sixth matrix and denotes a model parameter of the first RNN model, and $v$ denotes the first guiding information.

**3.** The method according to claim 1, wherein the determining (104) the descriptive statement of the target image based on the first guiding information, the first annotation vector set and the first initial input data by using the decoder (30) comprises:

determining (204) a second annotation vector set and second initial input data based on the first guiding information, the first annotation vector set and the first initial input data by using a reviewer (50), wherein the reviewer (50) is an RNN model, and configured to dig an interactive relationship between the global feature and the local feature extracted from the image (10);
generating second guiding information based on the second annotation vector set by using a second guiding network model (60), wherein the second guiding network model is configured to generate guiding information based on an annotation vector set (205); and
determining (206) the descriptive statement of the target image based on the second guiding information, the second annotation vector set and the second initial input data by using the decoder (30).

**4.** The method according to claim 3,
wherein the determining (204) the second annotation vector set and the second initial input data based on the first guiding information, the first annotation vector set, and the first initial input data by using the reviewer (50) comprises:

determining, when a second RNN model is used in the first reviewer (50), and the second RNN model is configured to perform N second sequential steps, for each of the second sequential steps performed by the second RNN model, input data of the second sequential step based on the first guiding information,
wherein N denotes a number of circularly processing the input data by the second RNN model, N is a positive integer, and each of the second sequential steps is a step of processing the input data by the second RNN model;
determining output data of each of the second sequential steps based on the input data of the second sequential step, the first annotation vector set and output data of a previous second sequential step of the second sequential step, wherein
when the second sequential step is the first one of the N second sequential steps, the output data of the previous second sequential step of the second sequential step is determined based on the first initial input data;
determining the second initial input data based on the output data of a last second sequential step in the N second sequential steps; and
determining the second annotation vector set based on all output data of the N second sequential steps.

**5.** The method according to claim 3 or 4, further comprising: before the performing (101) feature extraction on the target image by using the encoder (10) to obtain the feature vector and the first annotation vector set,

combining a to-be-trained second encoder, a to-be-trained second guiding network model, a to-be-trained reviewer, a to-be-trained third guiding network model and a to-be-trained second decoder, to obtain a second cascaded network model; and
training the second cascaded network model based on a plurality of sample images and descriptive statements of the plurality of sample images using a gradient descent method, to obtain the encoder (10), the first guiding network model (20), the reviewer (30), the second guiding network model (60) and the decoder (30).

**6.** An apparatus comprising a processor and a memory, with the memory storing thereon at least one instruction, at least one program, and a code set or an instruction set, wherein the instruction, the program, and the code set or the instruction set is loaded and executed by the processor to implement the method for recognizing an image according to any one of claims 1 to 5.

**7.** A computer readable storage medium having stored thereon at least one instruction, at least one program, and a code set or an instruction set, wherein the instruction, the program, and the code set or the instruction set is loaded and executed by a processor to implement the method for recognizing an image according to any one of claims 1 to 5.

## Patentansprüche

**1.** Verfahren zur Erkennung eines von einer blinden Person zu erkennenden Bildes, durchgeführt durch ein Endgerät, umfassend:

Durchführen (101) Merkmalsextraktion an einem zu erkennenden Zielbild unter Verwendung eines Kodierers (10), um einen Merkmalsvektor zu erhalten, der eine globale Eigenschaft des Zielbildes anzeigt, und einen ersten Annotationsvektorsatz, der eine lokale Eigenschaft des Zielbildes anzeigt;
Durchführen der Initialisierungsverarbeitung am Merkmalsvektor (102), um erste anfängliche Eingabedaten zu erhalten, die einen Anfangszustand eines Dekodierers (30) anzeigen, wobei die Initialisierungsverarbeitung eine lineare Transformation umfasst, die am Merkmalsvektor durchgeführt wird, und die ersten anfänglichen Eingabedaten erste anfängliche versteckte Zustandsinformationen enthalten, die einen Anfangszustand einer versteckten Schicht des Dekodierers (30) anzeigen, und erste anfängliche Speicherzellenzustandsinformationen, die einen Anfangszustand einer Speicherzelle des Dekodierers (30) anzeigen;
Erzeugen (103) erster Leitinformationen basierend auf dem ersten Annotationsvektorsatz unter Verwendung eines ersten Leitnetzwerkmodells (20), wobei das erste Leitnetzwerkmodell (20) konfiguriert ist, Leitinformationen gemäß einem Annotationsvektorsatz eines Bildes zu erzeugen; und
Bestimmen (104) einer beschreibenden Aussage des Zielbildes basierend auf den ersten Leitinformationen, dem ersten Annotationsvektorsatz und den ersten anfänglichen Eingabedaten durch den Dekodierer (30), und Umwandeln der bestimmten beschreibenden Aussage in Stimme und/oder Braille, damit die blinde Person das Bild erkennen kann,
wobei das erste Leitnetzwerkmodell (20) konfiguriert ist, Leitinformationen gemäß dem Annotationsvektorsatz und Attributinformationen eines Bildes zu erzeugen, und die Attributinformationen verwendet werden, um eine vorhergesagte Auftretenswahrscheinlichkeit eines Wortes in einer beschreibenden Aussage des Bildes anzuzeigen,

**dadurch gekennzeichnet, dass**

das Erzeugen (103) der ersten Leitinformationen basierend auf dem ersten Annotationsvektorsatz unter Verwendung des ersten Leitnetzwerkmodells (20) umfasst:

Eingeben des Zielbildes in ein Multi-Instanz-Modell (40), Verarbeiten des Zielbildes unter Verwendung des Multi-Instanz-Modells (40), um die Attributinformationen des Zielbildes zu erhalten;
wobei das Multi-Instanz-Modell (40) durch Training unter Verwendung einer Vielzahl von Beispielbildern und beschreibenden Aussagen der mehreren Beispielbilder erhalten wird;
Durchführen einer linearen Transformation am ersten Annotationsvektorsatz basierend auf einer dritten Matrix, die durch Modellparameter im ersten Leitnetzwerkmodell (20) konstruiert wurde, um eine vierte Matrix zu erhalten;
Erzeugen einer fünften Matrix basierend auf der vierten Matrix und den Attributinformationen des Zielbildes; und
Bestimmen der ersten Leitinformationen basierend auf einem Maximalwert jeder Zeile in der fünften Matrix,
wobei das Bestimmen (104) der beschreibenden Aussage des Zielbildes basierend auf den ersten Leitinformationen, dem ersten Annotationsvektorsatz und den ersten anfänglichen Eingabedaten unter Verwendung des Dekodierers (30) umfasst:
Dekodieren des ersten Annotationsvektorsatzes und der ersten anfänglichen Eingabedaten basierend auf den ersten Leitinformationen unter Verwendung des Dekodierers (30), um die beschreibende Aussage des Zielbildes zu erhalten, wobei das Dekodieren des ersten Annotationsvektorsatzes und der ersten anfänglichen Eingabedaten basierend auf den ersten Leitinformationen unter Verwendung des Dekodierers (30), um die beschreibende Aussage des Zielbildes zu erhalten, umfasst:

Bestimmen, unter Verwendung eines ersten rekurrenten neuronalen Netzwerks, RNN-Modells, im Dekodierer (30), und das erste RNN-Modell ist konfiguriert, M erste sequentielle Schritte durchzuführen, für jeden der ersten sequentiellen Schritte, die vom ersten RNN-Modell durchgeführt werden, Eingabedaten des ersten sequentiellen Schritts basierend auf den ersten Leitinformationen,
wobei M eine Anzahl von kreisförmigen Verarbeitungen der Eingabedaten durch das erste RNN-Modell bezeichnet, M ist eine positive ganze Zahl, und jeder der ersten sequentiellen Schritte ist ein Schritt der Verarbeitung der Eingabedaten durch das erste RNN-Modell;
Bestimmen der Ausgabedaten jedes der ersten sequentiellen Schritte basierend auf den Eingabedaten des ersten sequentiellen Schritts, dem ersten Annotationsvektorsatz und den Ausgabedaten eines vorherigen sequentiellen Schritts des ersten sequentiellen Schritts, wobei
wenn der erste sequentielle Schritt der erste in den M ersten sequentiellen Schritten ist, die Ausgabedaten des vorherigen sequentiellen Schritts des ersten sequentiellen Schritts basierend auf den ersten anfänglichen Eingabedaten bestimmt werden; und
Bestimmen der beschreibenden Aussage des Zielbildes basierend auf allen Ausgabedaten der M ersten sequentiellen Schritte.

2. Verfahren nach Anspruch 1,
wobei das Bestimmen der Eingabedaten des ersten sequentiellen Schritts basierend auf den ersten Leitinformationen umfasst:
Bestimmen der Eingabedaten des ersten sequentiellen Schritts basierend auf den ersten Leitinformationen gemäß einer Formel wie folgt

$$x_t = Ey_t + Qv$$

wobei t den ersten sequentiellen Schritt bezeichnet, $x_t$ die Eingabedaten des ersten sequentiellen Schritts bezeichnet, E eine Wort-Einbettungsmatrix bezeichnet und einen Modellparameter des ersten RNN-Modells bezeichnet, yt einen One-Hot-Vektor eines Wortes bezeichnet, das dem ersten sequentiellen Schritt entspricht, und das Wort, das dem ersten sequentiellen Schritt entspricht, basierend auf den Ausgabedaten eines vorherigen sequentiellen Schritts des ersten sequentiellen Schritts bestimmt wird, Q eine sechste Matrix bezeichnet und einen Modellparameter des ersten RNN-Modells bezeichnet, und v die ersten Leitinformationen bezeichnet.

3. Verfahren nach Anspruch 1, wobei das Bestimmen (104) der beschreibenden Aussage des Zielbildes basierend auf den ersten Leitinformationen, dem ersten Annotationsvektorsatz und den ersten anfänglichen Eingabedaten unter Verwendung des Dekodierers (30) umfasst:

Bestimmen (204) eines zweiten Annotationsvektorsatzes und zweiter anfänglicher Eingabedaten basierend auf den ersten Leitinformationen, dem ersten Annotationsvektorsatz und den ersten anfänglichen Eingabedaten unter Verwendung eines Prüfers (50), wobei der Prüfer (50) ein RNN-Modell ist und konfiguriert ist, eine interaktive Beziehung zwischen der globalen Eigenschaft und der lokalen Eigenschaft, die aus dem Bild (10) extrahiert wurde, zu ergründen;
Erzeugen zweiter Leitinformationen basierend auf dem zweiten Annotationsvektorsatz unter Verwendung eines zweiten Leitnetzwerkmodells (60), wobei das zweite Leitnetzwerkmodell konfiguriert ist, Leitinformationen basierend auf einem Annotationsvektorsatz (205) zu erzeugen; und
Bestimmen (206) der beschreibenden Aussage des Zielbildes basierend auf den zweiten Leitinformationen, dem zweiten Annotationsvektorsatz und den zweiten anfänglichen Eingabedaten unter Verwendung des Dekodierers (30).

4. Verfahren nach Anspruch 3,
wobei das Bestimmen (204) des zweiten Annotationsvektorsatzes und der zweiten anfänglichen Eingabedaten basierend auf den ersten Leitinformationen, dem ersten Annotationsvektorsatz und den ersten anfänglichen Eingabedaten unter Verwendung des Prüfers (50) umfasst:

Bestimmen, wenn ein zweites RNN-Modell im ersten Prüfer (50) verwendet wird, und das zweite RNN-Modell konfiguriert ist, N zweite sequentielle Schritte durchzuführen, für jeden der zweiten sequentiellen Schritte, die vom zweiten RNN-Modell durchgeführt werden, Eingabedaten des zweiten sequentiellen Schritts basierend auf den ersten Leitinformationen,
wobei N eine Anzahl von kreisförmigen Verarbeitungen der Eingabedaten durch das zweite RNN-Modell bezeichnet, N ist eine positive ganze Zahl, und jeder der zweiten sequentiellen Schritte ist ein Schritt der Verarbeitung der Eingabedaten durch das zweite RNN-Modell;
Bestimmen der Ausgabedaten jedes der zweiten sequentiellen Schritte basierend auf den Eingabedaten des zweiten sequentiellen Schritts, dem ersten Annotationsvektorsatz und den Ausgabedaten eines vorherigen zweiten sequentiellen Schritts des zweiten sequentiellen Schritts, wobei
wenn der zweite sequentielle Schritt der erste der N zweiten sequentiellen Schritte ist, die Ausgabedaten des vorherigen zweiten sequentiellen Schritts des zweiten sequentiellen Schritts basierend auf den ersten anfänglichen Eingabedaten bestimmt werden;
Bestimmen der zweiten anfänglichen Eingabedaten basierend auf den Ausgabedaten eines letzten zweiten sequentiellen Schritts in den N zweiten sequentiellen Schritten; und
Bestimmen des zweiten Annotationsvektorsatzes basierend auf allen Ausgabedaten der N zweiten sequentiellen Schritte.

5. Verfahren nach Anspruch 3 oder 4, ferner umfassend: vor dem Durchführen (101) der Merkmalsextraktion am Zielbild unter Verwendung des Kodierers (10), um den Merkmalsvektor und den ersten Annotationsvektorsatz zu erhalten,

Kombinieren eines zu trainierenden zweiten Kodierers, eines zu trainierenden zweiten Leitnetzwerkmodells, eines zu trainierenden Prüfers, eines zu trainierenden dritten Leitnetzwerkmodells und eines zu trainierenden zweiten Dekodierers, um ein zweites kaskadiertes Netzwerkmodell zu erhalten; und
Trainieren des zweiten kaskadierten Netzwerkmodells basierend auf einer Vielzahl von Beispielbildern und beschreibenden Aussagen der Vielzahl von Beispielbildern unter Verwendung einer Gradientenabstiegsmethode, um den Kodierer (10), das erste Leitnetzwerkmodell (20), den Prüfer (30), das zweite Leitnetzwerkmodell (60) und den Dekodierer (30) zu erhalten.

6. Vorrichtung umfassend einen Prozessor und einen Speicher, wobei der Speicher mindestens eine Anweisung, mindestens ein Programm und einen Codesatz oder einen Anweisungssatz speichert, wobei die Anweisung, das Programm und der Codesatz oder der Anweisungssatz vom Prozessor geladen und ausgeführt werden, um das Verfahren zur Erkennung eines Bildes gemäß einer der Ansprüche 1 bis 5 zu implementieren.

7. Computerlesbares Speichermedium, auf dem mindestens eine Anweisung, mindestens ein Programm und ein Codesatz oder ein Anweisungssatz gespeichert sind, wobei die Anweisung, das Programm und der Codesatz oder der Anweisungssatz von einem Prozessor geladen und ausgeführt werden, um das Verfahren zur Erkennung eines Bildes gemäß einer der Ansprüche 1 bis 5 zu implementieren.

## Revendications

**1.** Méthode de reconnaissance d'une image à reconnaître par une personne aveugle, effectuée par un terminal, et comprenant :

effectuer (101) une extraction de caractéristiques sur une image cible à reconnaître en utilisant un encodeur (10), pour obtenir un vecteur de caractéristiques pour indiquer une caractéristique globale de l'image cible et un premier ensemble de vecteurs d'annotation pour indiquer une caractéristique locale de l'image cible ;
effectuer un traitement d'initialisation sur le vecteur de caractéristiques (102), pour obtenir des premières données d'entrée initiales pour indiquer un état initial d'un décodeur (30), où le traitement d'initialisation comprend une transformation linéaire à effectuer sur le vecteur de caractéristiques, et les premières données d'entrée initiales incluent une première information d'état caché initiale pour indiquer un état initial d'une couche cachée du décodeur (30) et une première information d'état de cellule mémoire initiale pour indiquer un état initial d'une cellule mémoire du décodeur (30);
générer (103) une première information de guidage basée sur le premier ensemble de vecteurs d'annotation en utilisant un premier modèle de réseau de guidage (20), le premier modèle de réseau de guidage (20) étant configuré pour générer des informations de guidage selon un ensemble de vecteurs d'annotation d'une image ; et
déterminer (104) un énoncé descriptif de l'image cible basé sur la première information de guidage, le premier ensemble de vecteurs d'annotation et les premières données d'entrée initiales par un décodeur (104), et
transformer l'énoncé descriptif déterminé en voix et/ou braille pour que la personne aveugle reconnaisse l'image,
où le premier modèle de réseau de guidage (20) est configuré pour générer des informations de guidage selon l'ensemble de vecteurs d'annotation et les informations d'attribut d'une image, et les informations d'attribut sont utilisées pour indiquer une probabilité d'occurrence prédite d'un mot dans un énoncé descriptif de l'image,
**caractérisé en ce que**
la génération (103) de la première information de guidage basée sur le premier ensemble de vecteurs d'annotation en utilisant le premier modèle de réseau de guidage (20) comprend :

entrer l'image cible dans un modèle multi-instance (40), traiter l'image cible en utilisant le modèle multi-instance (40), pour obtenir les informations d'attribut de l'image cible ;
où le modèle multi-instance (40) est obtenu par entraînement en utilisant une pluralité d'images d'échantillon et des énoncés descriptifs des multiples images d'échantillon ;
effectuer une transformation linéaire sur le premier ensemble de vecteurs d'annotation basé sur une troisième matrice construite par des paramètres du modèle dans le premier modèle de réseau de guidage (20), pour obtenir une quatrième matrice ;
générer une cinquième matrice basée sur la quatrième matrice et les informations d'attribut de l'image cible ; et
déterminer la première information de guidage basée sur une valeur maximale de chaque ligne dans la cinquième matrice,
où la détermination (104) de l'énoncé descriptif de l'image cible basé sur la première information de guidage, le premier ensemble de vecteurs d'annotation et les premières données d'entrée initiales en utilisant le décodeur (30) comprend :
décoder le premier ensemble de vecteurs d'annotation et les premières données d'entrée initiales basées sur la première information de guidage en utilisant le décodeur (30), pour obtenir l'énoncé descriptif de l'image cible, où le décodage du premier ensemble de vecteurs d'annotation et des premières données d'entrée initiales basé sur la première information de guidage en utilisant le décodeur (30), pour obtenir l'énoncé descriptif de l'image cible comprend :

déterminer, en utilisant un premier modèle de réseau de neurones récurrent, modèle RNN, dans le décodeur (30), et le premier modèle RNN est configuré pour effectuer M premières étapes séquentielles, pour chacune des premières étapes séquentielles effectuées par le premier modèle RNN, des données d'entrée de la première étape séquentielle basées sur la première information de guidage,
où M désigne un nombre de traitement circulaire des données d'entrée par le premier modèle RNN, M est un entier positif, et chacune des premières étapes séquentielles est une étape de traitement des données d'entrée par le premier modèle RNN ;
déterminer les données de sortie de chacune des premières étapes séquentielles basées sur les données d'entrée de la première étape séquentielle, le premier ensemble de vecteurs d'annotation et les données de sortie d'une étape séquentielle précédente de la première étape séquentielle, où lorsque la première étape séquentielle est la première dans les M premières étapes séquentielles, les données de sortie de l'étape séquentielle précédente de la première étape séquentielle sont déterminées en fonction des premières données d'entrée initiales ; et
déterminer l'énoncé descriptif de l'image cible basé sur toutes les données de sortie des M premières étapes séquentielles.

2. La méthode selon la revendication 1,
où la détermination des données d'entrée de la première étape séquentielle basée sur la première information de guidage comprend :
déterminer les données d'entrée de la première étape séquentielle basées sur la première information de guidage selon une formule comme suit

$$x_t = Ey_t + Qv$$

où t désigne la première étape séquentielle, $x_t$ désigne les données d'entrée de la première étape séquentielle, E désigne une matrice d'intégration de mots et désigne un paramètre de modèle du premier modèle RNN, $y_t$ désigne un vecteur one-hot d'un mot correspondant à la première étape séquentielle, et le mot correspondant à la première étape séquentielle est déterminé en fonction des données de sortie d'une étape séquentielle précédente de la première étape séquentielle, Q désigne une sixième matrice et désigne un paramètre de modèle du premier modèle RNN, et v désigne la première information de guidage.

3. La méthode selon la revendication 1, où la détermination (104) de l'énoncé descriptif de l'image cible basé sur la première information de guidage, le premier ensemble de vecteurs d'annotation et les premières données d'entrée initiales en utilisant le décodeur (30) comprend :

déterminer (204) un second ensemble de vecteurs d'annotation et des secondes données d'entrée initiales basées sur la première information de guidage, le premier ensemble de vecteurs d'annotation et les premières données d'entrée initiales en utilisant un réviseur (50), où le réviseur (50) est un modèle RNN, et configuré pour creuser une relation interactive entre la caractéristique globale et la caractéristique locale extraite de l'image (10) ;
générer une seconde information de guidage basée sur le second ensemble de vecteurs d'annotation en utilisant un second modèle de réseau de guidage (60), où le second modèle de réseau de guidage est configuré pour générer des informations de guidage basées sur un ensemble de vecteurs d'annotation (205) ; et
déterminer (206) l'énoncé descriptif de l'image cible basé sur la seconde information de guidage, le second ensemble de vecteurs d'annotation et les secondes données d'entrée initiales en utilisant le décodeur (30).

4. La méthode selon la revendication 3,
où la détermination (204) du second ensemble de vecteurs d'annotation et des secondes données d'entrée initiales basées sur la première information de guidage, le premier ensemble de vecteurs d'annotation, et les premières données d'entrée initiales en utilisant le réviseur (50) comprend :

déterminer, lorsqu'un second modèle RNN est utilisé dans le premier réviseur (50), et le second modèle RNN est configuré pour effectuer N secondes étapes séquentielles, pour chacune des secondes étapes séquentielles effectuées par le second modèle RNN, des données d'entrée de la seconde étape séquentielle basées sur la première information de guidage,
où N désigne un nombre de traitement circulaire des données d'entrée par le second modèle RNN, N est un entier positif, et chacune des secondes étapes séquentielles est une étape de traitement des données d'entrée par le second modèle RNN ;
déterminer les données de sortie de chacune des secondes étapes séquentielles basées sur les données d'entrée de la seconde étape séquentielle, le premier ensemble de vecteurs d'annotation et les données de sortie d'une étape séquentielle précédente de la seconde étape séquentielle, où lorsque la seconde étape séquentielle est la première des N secondes étapes séquentielles, les données de sortie de l'étape séquentielle précédente de la seconde étape séquentielle sont déterminées en fonction des premières données d'entrée initiales ;
déterminer les secondes données d'entrée initiales basées sur les données de sortie d'une dernière seconde étape séquentielle dans les N secondes étapes séquentielles ; et

déterminer le second ensemble de vecteurs d'annotation basé sur toutes les données de sortie des N secondes étapes séquentielles.

**5.** La méthode selon la revendication 3 ou 4, comprenant en outre: avant d'effectuer (101) l'extraction de caractéristiques sur l'image cible en utilisant l'encodeur (10) pour obtenir le vecteur de caractéristiques et le premier ensemble de vecteurs d'annotation,

combiner un second encodeur à entraîner, un second modèle de réseau de guidage à entraîner, un réviseur à entraîner, un troisième modèle de réseau de guidage à entraîner et un second décodeur à entraîner, pour obtenir un second modèle de réseau en cascade ; et
entraîner le second modèle de réseau en cascade basé sur une pluralité d'images d'échantillon et des énoncés descriptifs de la pluralité d'images d'échantillon en utilisant une méthode de descente de gradient, pour obtenir l'encodeur (10), le premier modèle de réseau de guidage (20), le réviseur (30), le second modèle de réseau de guidage (60) et le décodeur (30).

**6.** Un appareil comprenant un processeur et une mémoire, la mémoire stockant au moins une instruction, au moins un programme, et un ensemble de codes ou un ensemble d'instructions, où l'instruction, le programme, et l'ensemble de codes ou l'ensemble d'instructions sont chargés et exécutés par le processeur pour mettre en œuvre la méthode de reconnaissance d'une image selon une des revendications 1 à 5.

**7.** Un support de stockage lisible par ordinateur ayant stocké au moins une instruction, au moins un programme, et un ensemble de codes ou un ensemble d'instructions, où l'instruction, le programme, et l'ensemble de codes ou l'ensemble d'instructions sont chargés et exécutés par un processeur pour mettre en œuvre la méthode de reconnaissance d'une image selon une des revendications 1 à 5.

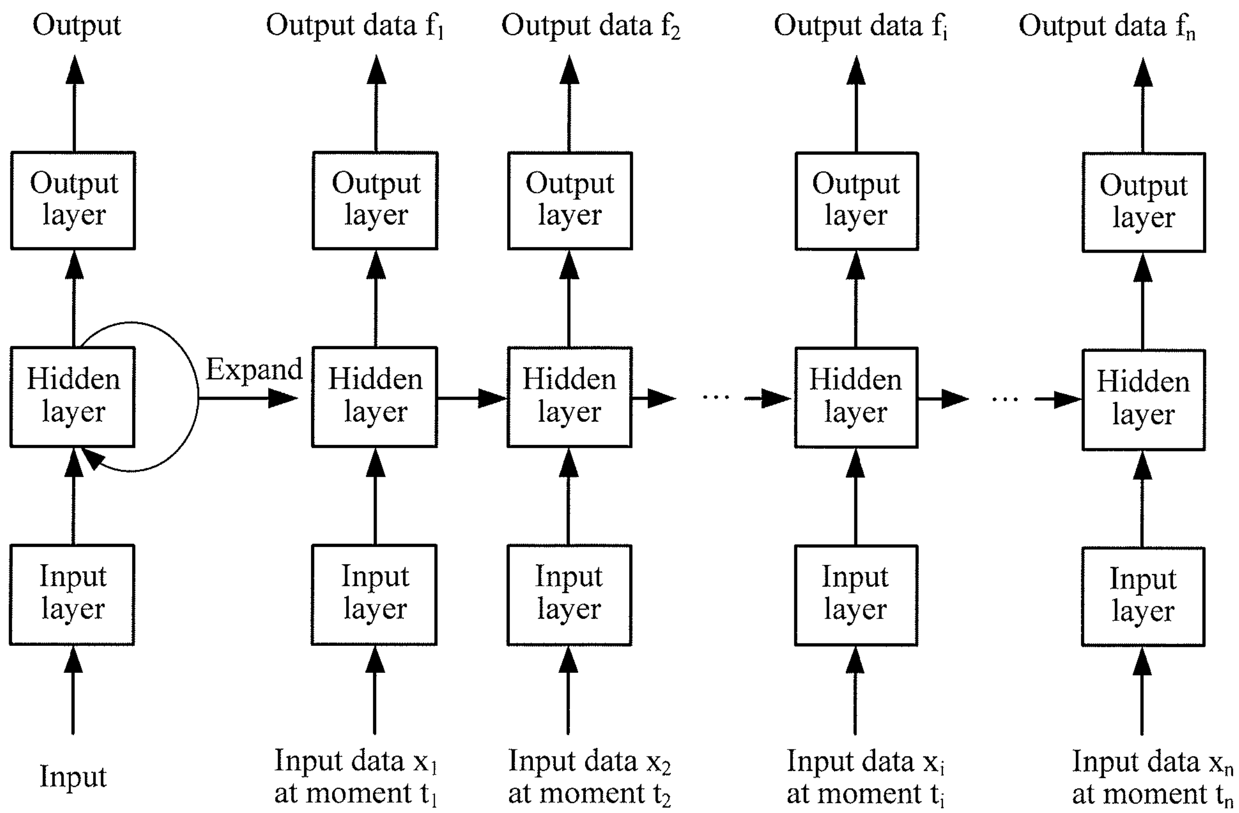
Output
Output data $f_1$
Output data $f_2$
Output data $f_i$
Output data $f_n$
Output layer
Hidden layer
Input layer
Expand
Input
Input data $x_1$ at moment $t_1$
Input data $x_2$ at moment $t_2$
Input data $x_i$ at moment $t_i$
Input data $x_n$ at moment $t_n$

FIG. 1

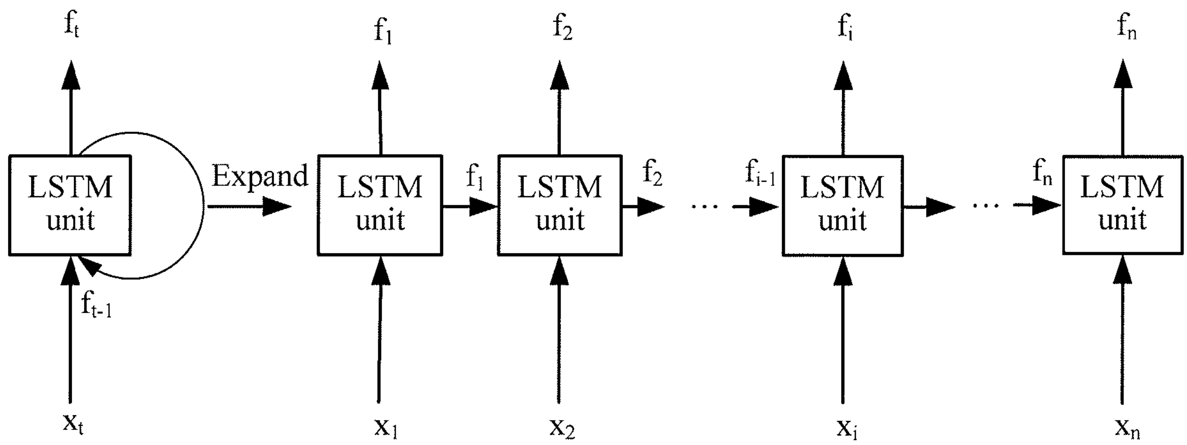
$f_t$
$f_1$
$f_2$
$f_i$
$f_n$
LSTM unit
Expand
$f_{t-1}$
$f_{i-1}$
$x_t$
$x_1$
$x_2$
$x_i$
$x_n$

FIG. 2

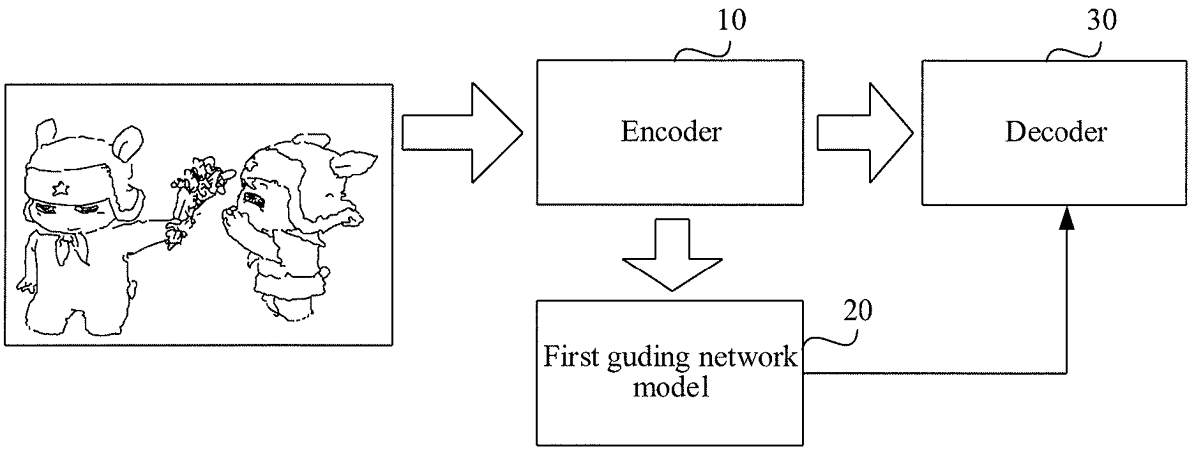
10
30
Encoder
Decoder
20
First guding network model

**FIG. 3**

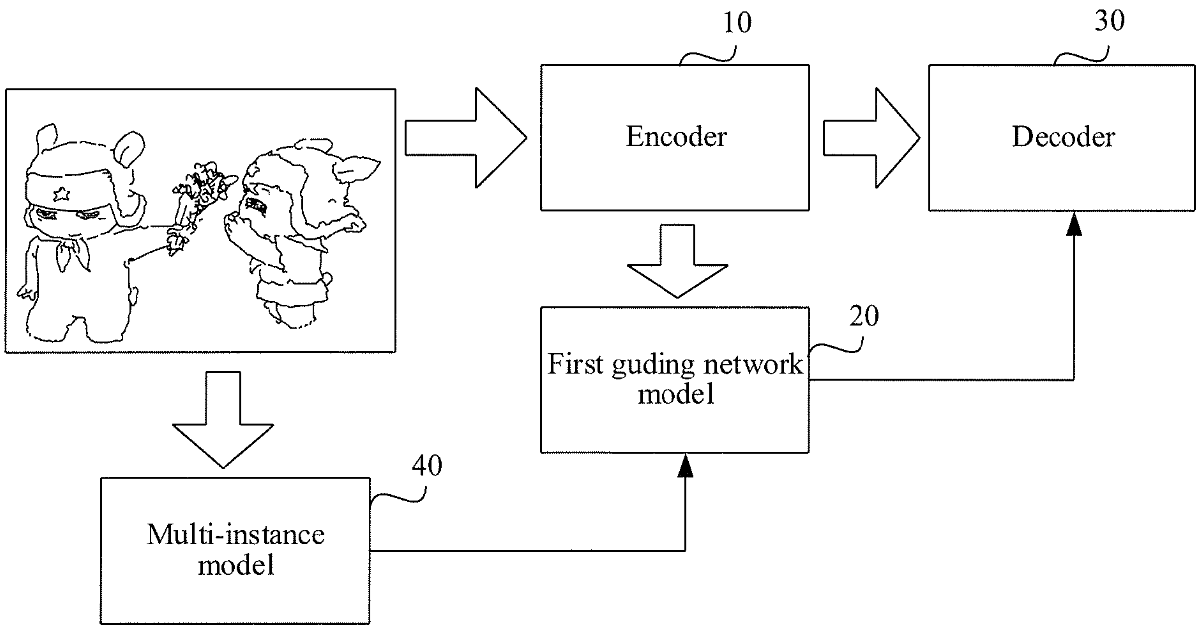
10
30
Encoder
Decoder
20
First guding network model
40
Multi-instance model

**FIG. 4**

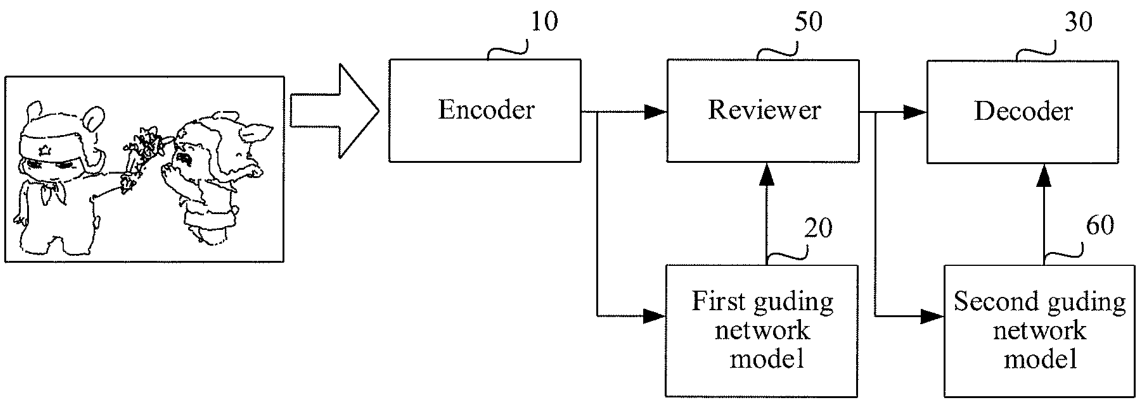
10
50
30
Encoder
Reviewer
Decoder
20
60
First guding network model
Second guding network model

FIG. 5

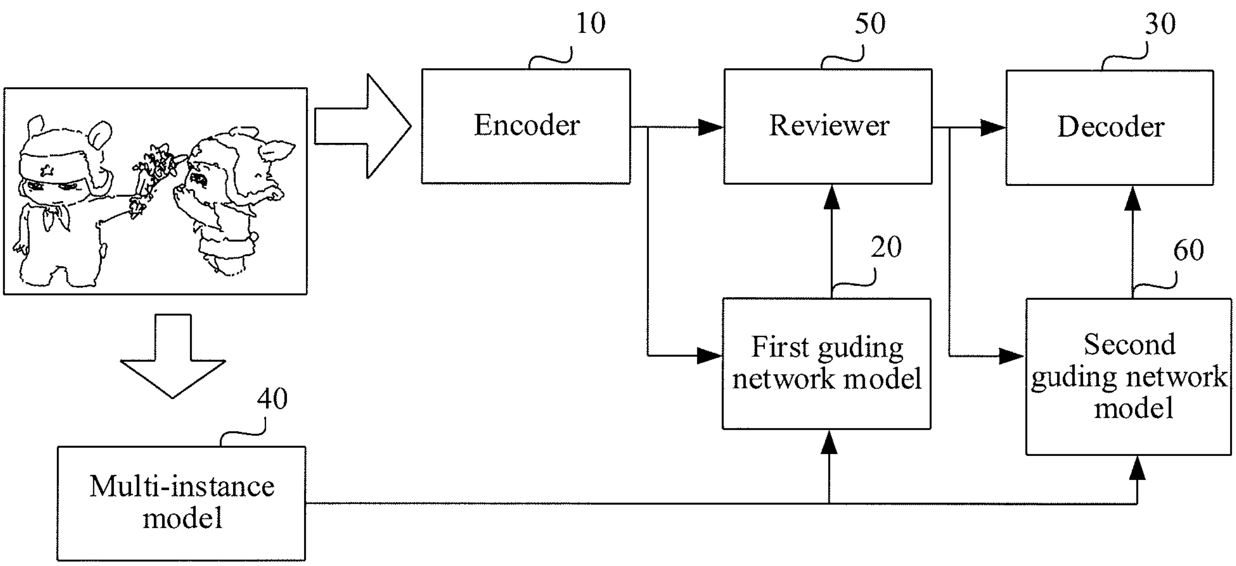
10
50
30
Encoder
Reviewer
Decoder
20
60
First guding network model
Second guding network model
40
Multi-instance model

FIG. 6

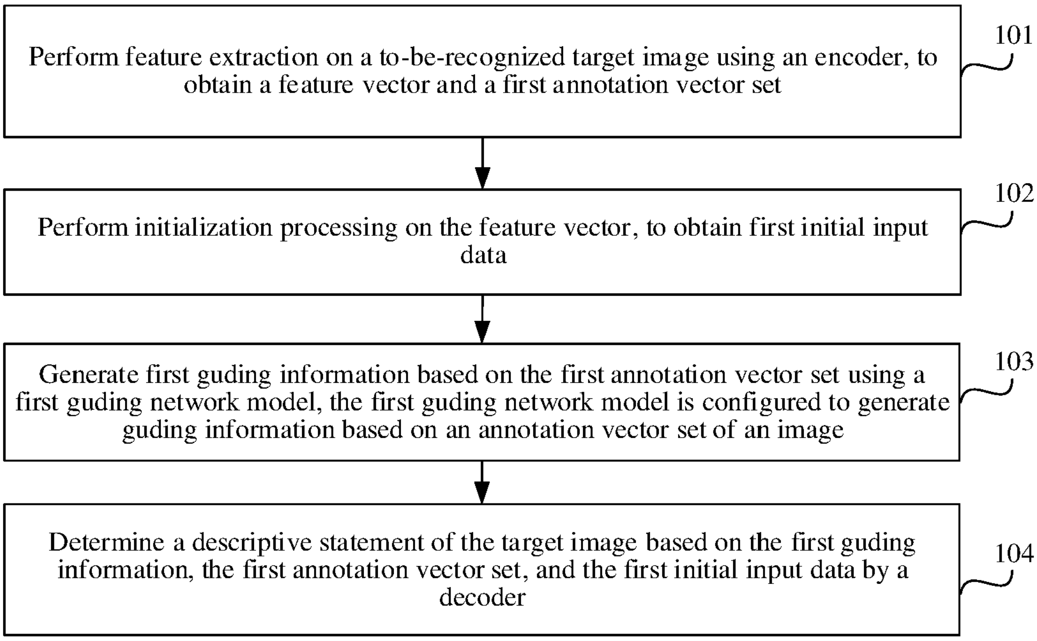
Perform feature extraction on a to-be-recognized target image using an encoder, to obtain a feature vector and a first annotation vector set
101
Perform initialization processing on the feature vector, to obtain first initial input data
102
Generate first guding information based on the first annotation vector set using a first guding network model, the first guding network model is configured to generate guding information based on an annotation vector set of an image
103
Determine a descriptive statement of the target image based on the first guding information, the first annotation vector set, and the first initial input data by a decoder
104

**FIG. 7**

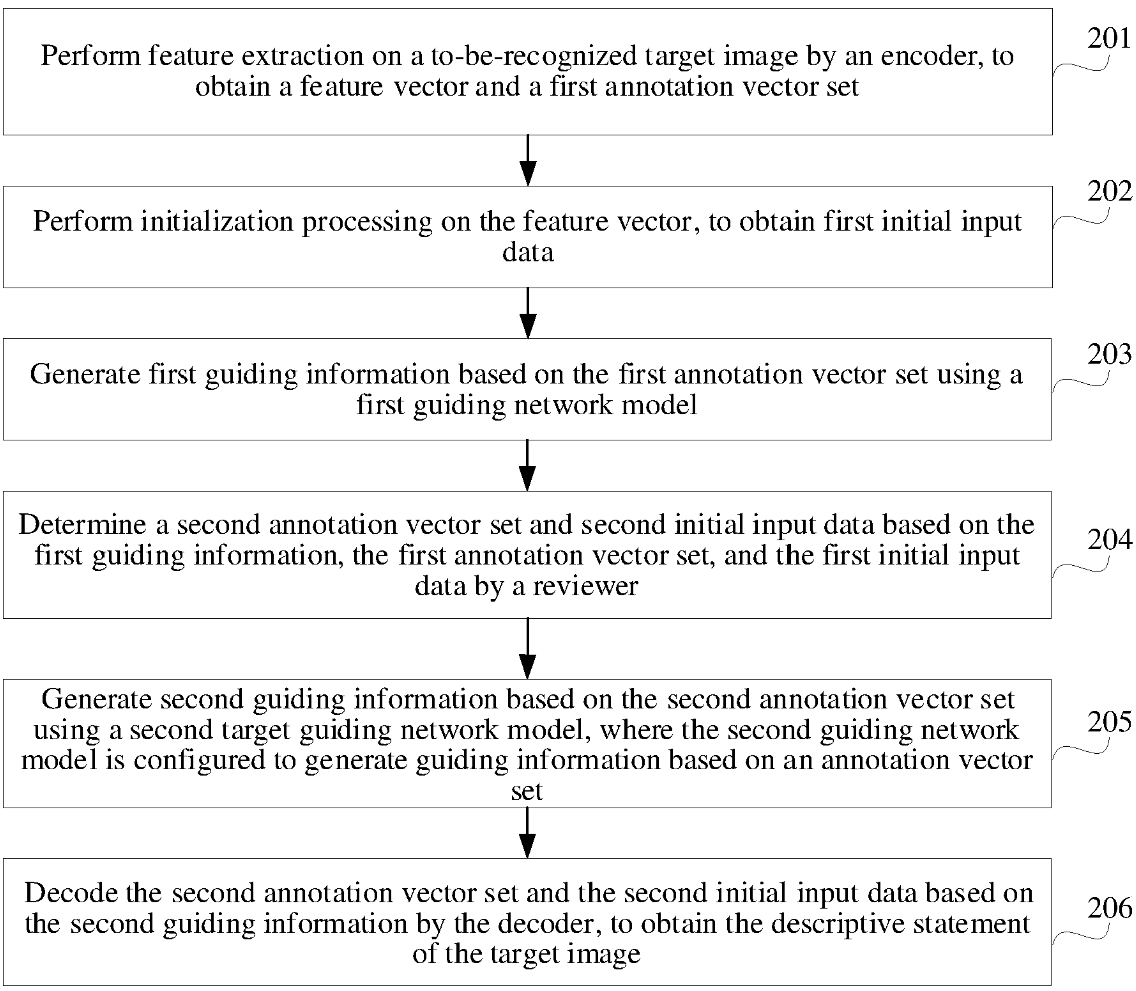
Perform feature extraction on a to-be-recognized target image by an encoder, to obtain a feature vector and a first annotation vector set
201
Perform initialization processing on the feature vector, to obtain first initial input data
202
Generate first guiding information based on the first annotation vector set using a first guiding network model
203
Determine a second annotation vector set and second initial input data based on the first guiding information, the first annotation vector set, and the first initial input data by a reviewer
204
Generate second guiding information based on the second annotation vector set using a second target guiding network model, where the second guiding network model is configured to generate guiding information based on an annotation vector set
205
Decode the second annotation vector set and the second initial input data based on the second guiding information by the decoder, to obtain the descriptive statement of the target image
206

**FIG. 8**

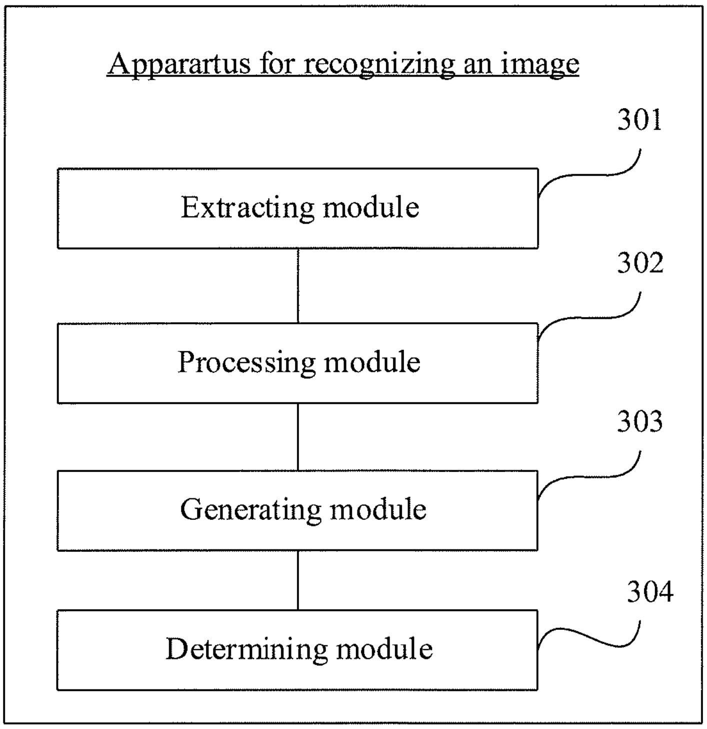
Apparartus for recognizing an image
301
Extracting module
302
Processing module
303
Generating module
304
Determining module

FIG. 9

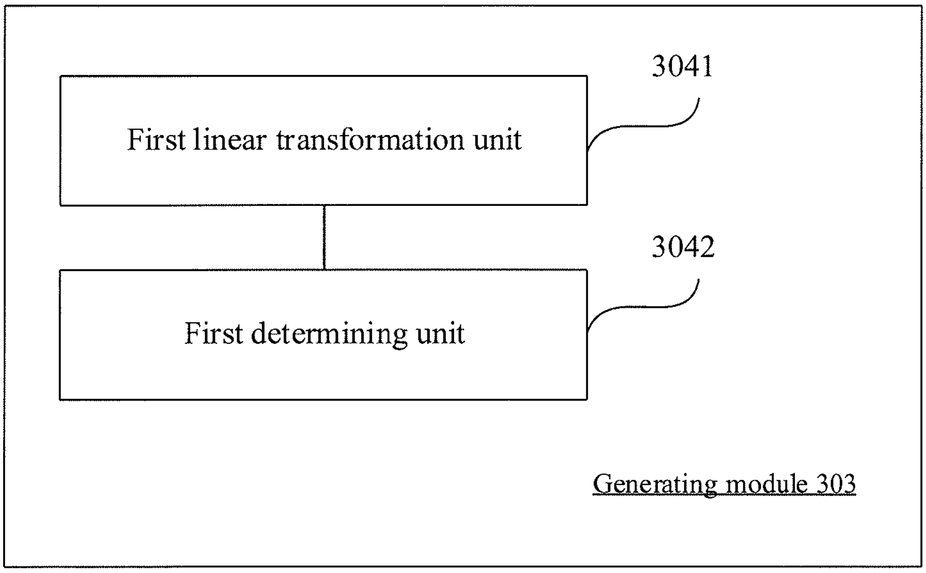
3041
First linear transformation unit
3042
First determining unit
Generating module 303

FIG. 10

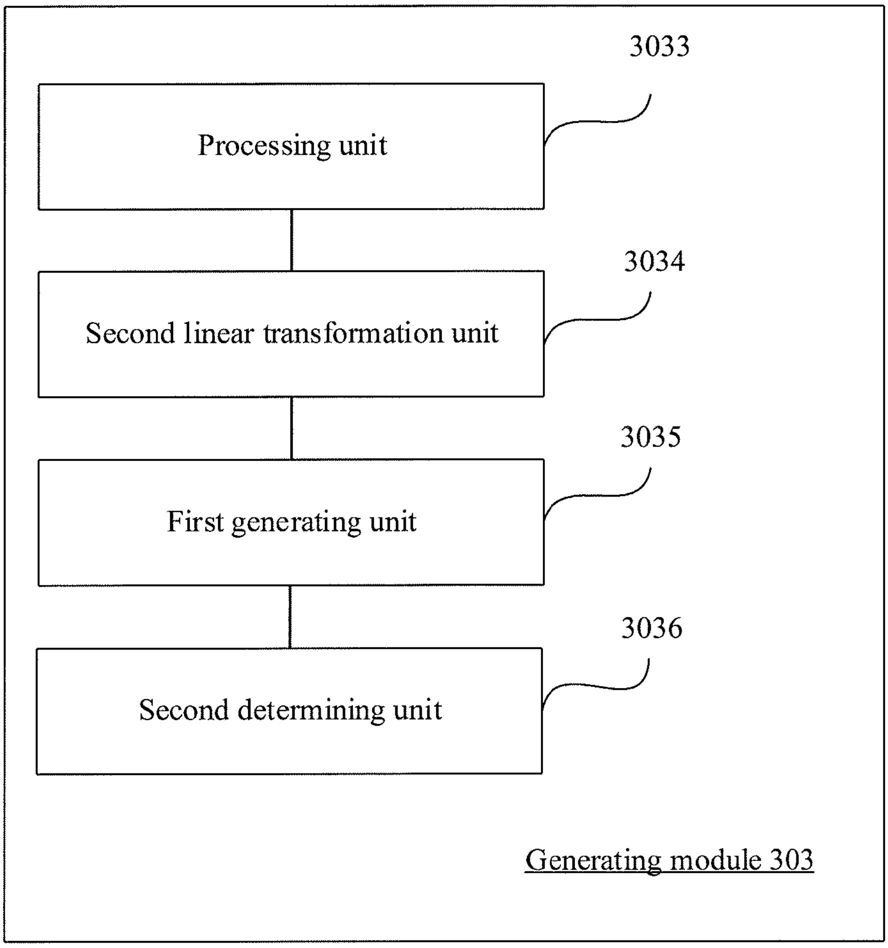
3033
Processing unit
3034
Second linear transformation unit
3035
First generating unit
3036
Second determining unit
Generating module 303

FIG. 11

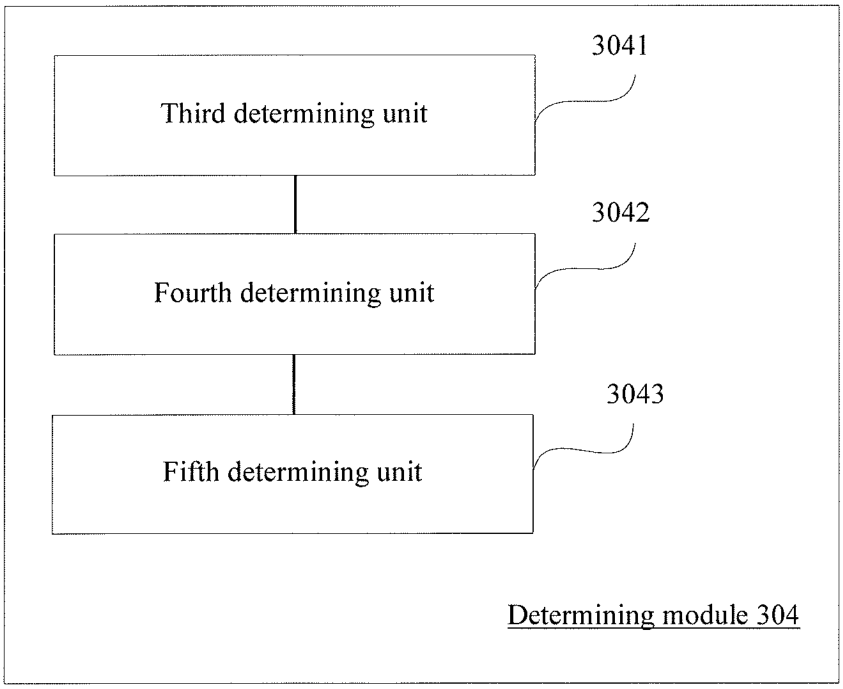
3041
Third determining unit
3042
Fourth determining unit
3043
Fifth determining unit
Determining module 304

FIG. 12

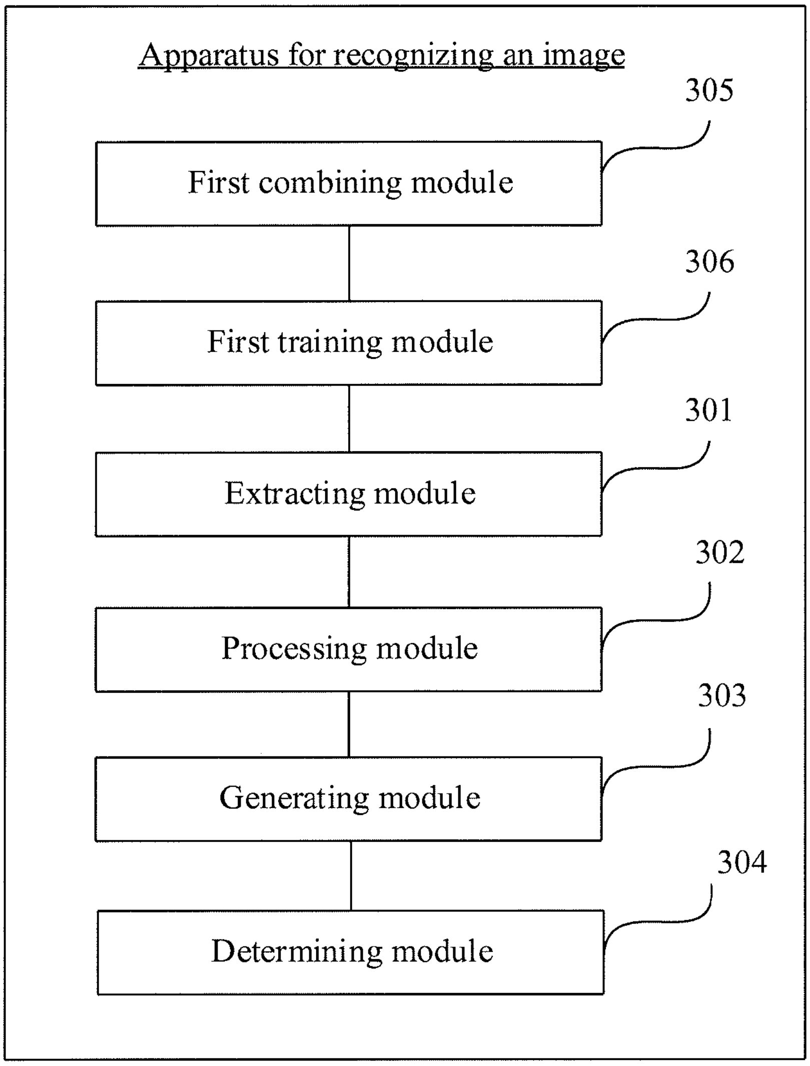
Apparatus for recognizing an image
305
First combining module
306
First training module
301
Extracting module
302
Processing module
303
Generating module
304
Determining module

FIG. 13

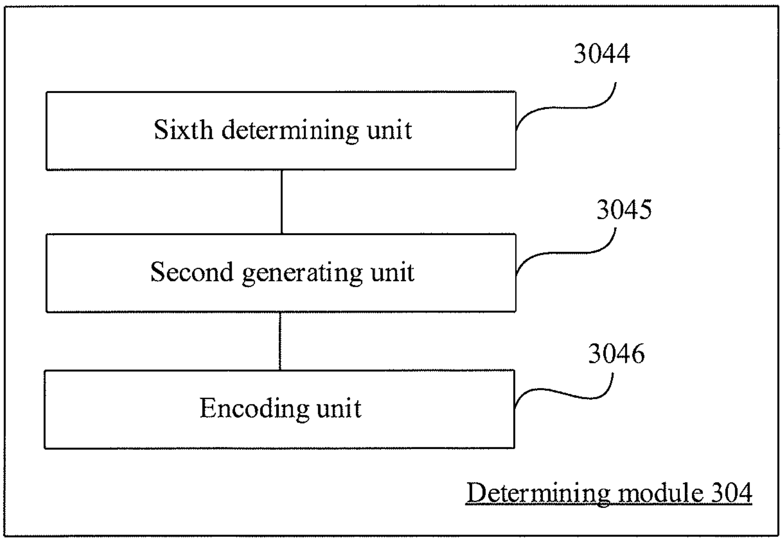
3044
Sixth determining unit
3045
Second generating unit
3046
Encoding unit
Determining module 304

FIG. 14

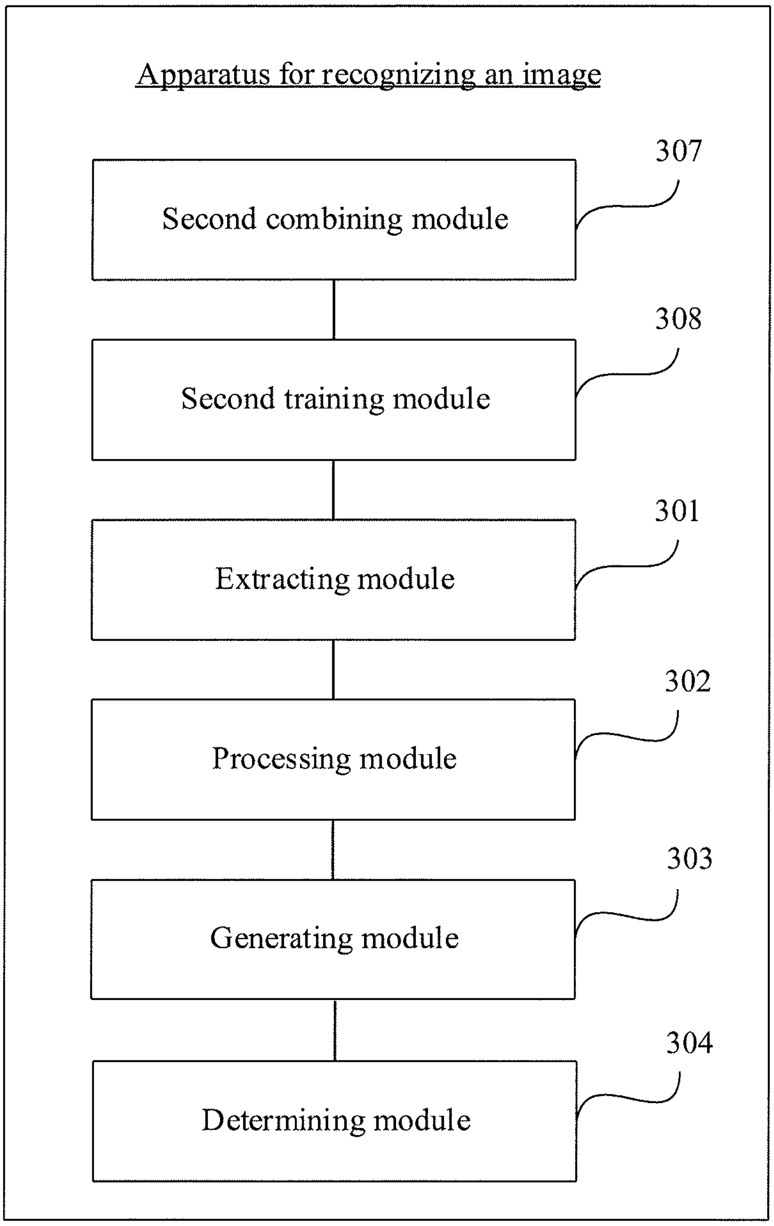
Apparatus for recognizing an image
307
Second combining module
308
Second training module
301
Extracting module
302
Processing module
303
Generating module
304
Determining module

FIG. 15

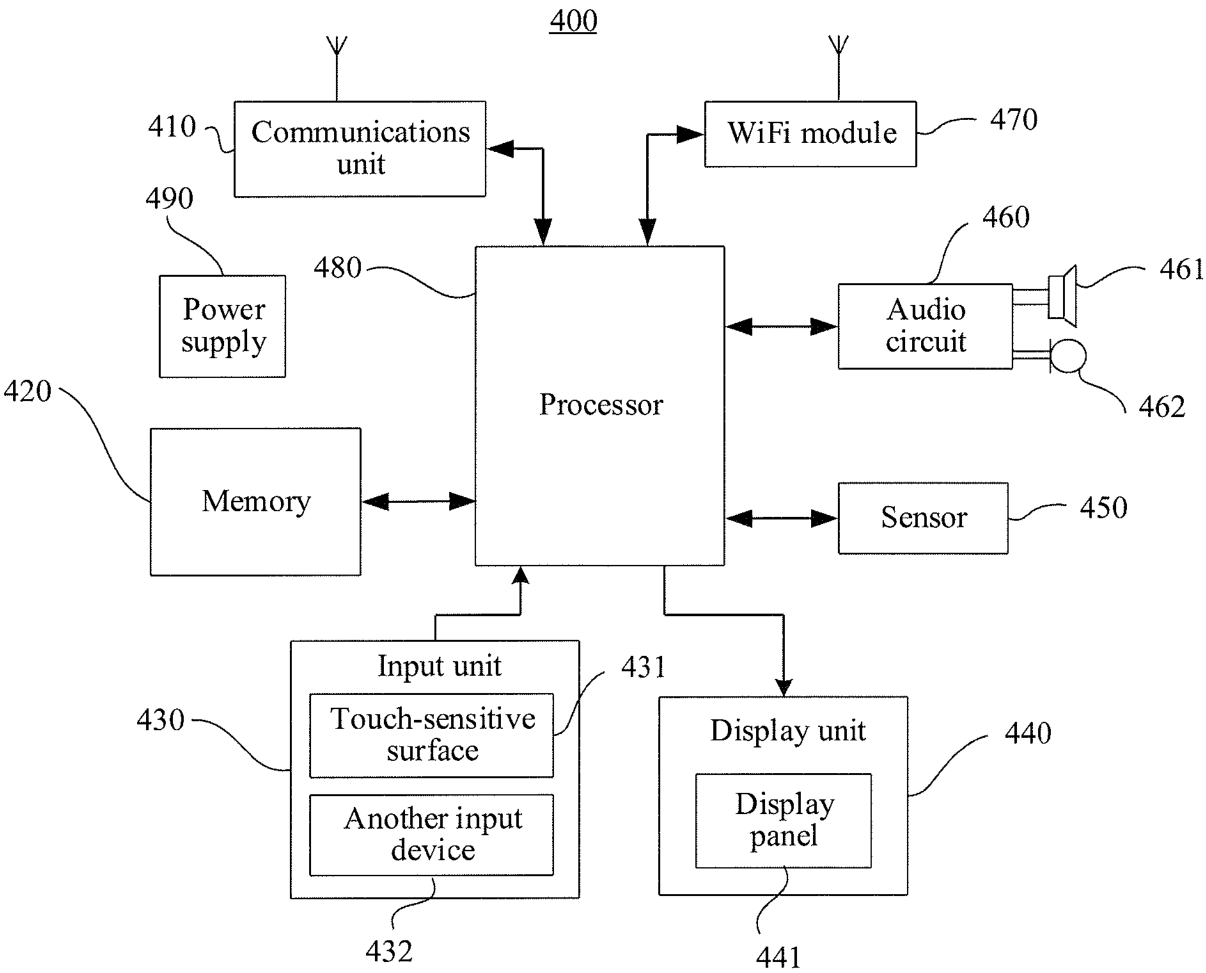
400
410
Communications unit
WiFi module
470
490
460
480
Power supply
Audio circuit
461
Processor
462
420
Memory
Sensor
450
Input unit
431
430
Touch-sensitive surface
Display unit
440
Another input device
Display panel
432
441

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **ZHILIN YANG et al.** *Review Networks for Caption Generation*, 27 October 2016, https://arxiv.org/pdf/1605.07912.pdf
- SCA-CNN: Spatial and Channel-wise Attention in Convolutional Networks for Image Captioning. **LONG CHEN et al.** ARXIV.ORG, CORNELL UNIVERSITY LIBRARY. OLIN LIBRARY CORNELL UNIVERSITY, 17 November 2016, vol. 201